# EUROPEAN PATENT SPECIFICATION

(11) **EP 2 016 149 B1**
(45) Date of publication and mention of the grant of the patent: **08.08.2018**
(21) Application number: 07751662.3
(22) Date of filing: 26.02.2007
(51) Int. Cl.: C08J 7/04, C09J 7/29, C09J 123/08

(54) **COATED POLYMERIC FILM**
BESCHICHTETER POLYMERFILM
FILM POLYMÈRE ENDUIT

(30) Priority: 25.04.2006 US 410574
(43) Date of publication of application: 21.01.2009
(73) Proprietor: Jindal Films Europe Virton SPRL, 6761 Virton (BE)
(72) Inventor: MCGEE, Dennis, E., Penfield, NY 14550 (US); GRINGOIRE, Bruno, R.l., B-6792 Rachecourt (BE)
(74) Representative: Barker Brettell LLP
(86) International application number: PCT/US2007/004920
(87) International publication number: WO 2007/130196

(56) References cited:
- US-A- 5 662 985
- US-A- 5 736 253
- US-A- 5 789 123
- US-A- 5 827 627
- US-A- 5 891 552
- US-A1- 2002 146 559
- BOWEN P: "Particle Size Distribution Measurement from Millimeters to Nanometers and from Rods to Platelets", JOURNAL OF DISPERSION SCIENCE AND TECHNOLOGY, TAYLOR AND FRANCIS GROUP, NEW YORK, NY, US, vol. 23, no. 5, 1 January 2002 (2002-01-01), pages 631-662, XP009102859, ISSN: 0193-2691, DOI: 10.1081/DIS-120015368
- "LAPONITE - Performance Additives; Technical Information B-RI 21", , 1 January 2014 (2014-01-01), pages 1-24, XP055175248, Retrieved from the Internet: URL:http://www.byk.com/fileadmin/byk/addit ives/product_groups/rheology/former_rockwo od_additives/technical_brochures/BYK_B-RI2 1_LAPONITE_EN.pdf [retrieved on 2015-03-10]
- Gj. Dezelic ET AL: "Determination of Size of Small Particles by Light Scattering. Experiments on Ludox Colloidal Silica", Kolloid-Zeitschrift, 1 January 1960 (1960-01-01), pages 38-48, XP055287787, Retrieved from the Internet: URL:http://download.springer.com/static/pd f/555/art%3A10.1007%2FBF01513625.pdf?origi nUrl=http://link.springer.com/article/10.1 007/BF01513625&token2=exp=1468327863~acl=/ static/pdf/555/art%253A10.1007%252FBF01513 625.pdf?originUrl=http%3A%2F%2Flink.spring er.com%2Farticle%2F10.1007%2FBF01513625*~h mac=753969 [retrieved on 2016-07-12]

## Description

### FIELD OF THE INVENTION

This invention relates to two-side coated polymer films. The films may be useful as labels, e.g. pressure sensitive labels. The invention in one particular embodiment relates to clear, printable, two-side coated, polymer-based films that are resistant to blocking while providing robust adherence to adhesives and resistance to moisture and pasteurization.

### BACKGROUND

Many untreated or uncoated polymeric films, such as films made from isotactic polypropylene, may not provide for acceptable adherence of inks or adhesives without special treating or coating. Coating and treating polymer films greatly improves their usefulness and functionality. However, when both sides of a film are treated and/or coated to increase surface energy, severe interfacial blocking problems can arise when the film is rolled or stacked. To be useful, processable, and functional, a topside surface of a polymer film should not block to a back-side surface.

In polymer films useful for labeling applications, it is desirable that a film is suitably printable on one surface of the film, while the other surface of the film suitably bonds with an adhesive that is useful for attaching the film or label to a container. Solutions to the blocking problem commonly provide for printing and applying an adhesive to the same surface. Thereby, only one surface of a film need possess an increased surface energy, thus controlling or avoiding blocking problems. To avoid blocking problems, films prepared for use as label facestock, particularly pressure sensitive facestock, may be coated on one surface with a coating that enhances printability, adhesive adhesion, mar resistance, and/or pasteurization resistance. The opposite side of such facestock film may be untreated.

Alternatively, some manufacturers prepare a label facestock that has a treated or coated topside surface for receiving printing inks, while no treatment or coating is provided on the adhesive-receiving surface (for example, Clear PSA4 manufactured by ExxonMobil Oil Corporation). A printer or converter may later corona-treat the adhesive-receiving surface immediately before applying an adhesive and a release liner to the facestock. For pressure-sensitive labels and adhesives, the adhesive is commonly first applied to a siliconized release liner, which is then laminated to the back-side or adhesive-receiving surface of the label facestock. When the laminated release liner is removed from the label facestock, the pressure-sensitive adhesive adheres more robustly to the label facestock than to the release liner. The desired result is a label facestock with a transfer-coated pressure-sensitive adhesive on the non-print, adhesive-receiving surface, while the label is printed on the top surface.

Since some laminators or printers do not have treating capabilities, label facestocks have also been prepared that provide a limited but acceptable degree of blocking that are useful for some applications. Such films may possess a print-side/top-side coating and a treated but uncoated adhesive-receiving/backside surface. Treatment of the adhesive-receiving surface by flame or corona discharge may be used on the adhesive-receiving side to render the uncoated plastic surface receptive to adhesives. For example, U.S. Patent Nos. 5,380,587 and 5,382,473 to Musclow, et al. disclose a multilayer packaging or label stock films having excellent printability and non-blocking characteristics to a treated, but uncoated, polyolefin surface. Such films may be challenging and rigorous to produce.

U.S. Patent No. 6,025,059 to McGee et al. discloses a plastic film coated with a top-side-printable epoxy coating that is the reaction product of a water-dispersible or water-soluble epoxy resin and an acidified aminoethylated vinyl polymer produced by polymerizing acrylate or another monomer, with methacrylic or acrylic acid. The acidified aminoethylated vinyl polymer may function as a hardener or curing agent. With proper control of coating weight, these coatings may not block too severely to uncoated polyolefin surfaces.

In U.S. Patent Application No. 20050112334, Servante discloses a printable film substrate that is coated with a coating containing water dispersible polymer and polyfunctional acrylates resulting from the esterification of a polyol with (meth)acrylic acid or polyallyl derivatives. In this patent application, a pressure sensitive adhesive may be applied to either the coated surface or the opposing uncoated surface can be covered with a pressure-sensitive adhesive. A releasing film or sheet consisting of a releasing agent may also cover the pressure-sensitive adhesive layer.

Film substrates that are only coated on the printing surface can function in some applications employing permanent or repositionable adhesives. Repositionable adhesives allow the labeler to remove and readjust misaligned labels for some period (usually about one day) after they have been applied to the labeled product. This minimizes the need to discard finished product with misaligned labels. With time, however, repositionable adhesives behave like permanent adhesives. Unlike labels with repositionable adhesives, removable pressure-sensitive labels should peel cleanly from labeled objects after being stored for months or years in a broad range of temperatures and humidity. Removable adhesives known in the art give poor or inconsistent performance if the adhesive-receiving layer is not coated or treated, especially after exposure to humid or tropical conditions, such as characterized by warm and moist air. Under such conditions, the anchorage of the removable adhesive to the label substrate may be degraded and when the removable label is peeled off the article, such as a piece of clothing or a jewel case for a CD, some adhesive may undesirably remain on the article.

Touhsaent (U.S. Patent No. 6,844,034) disclosed printable plastic substrates, preferably polymer films that are coated with a printable layer comprising an anionic acrylic polymer and epoxy acrylate. The anionic acrylic polymer can be cross-linked to improve label adhesion degradation resistance to isopropyl alcohol and/or hot water. He allowed for treatment or coating of the surface opposite the printable layer, but he did not teach how to select suitable coatings or treatment to the opposite surface that does not block to the first coated layer.

In U.S. Patent No. 6,893,722, McGee discloses a cationically stabilizable amino-functional polymer coating that is useful to promote adhesion of curable inks. The invention further relates to a one-side coated plastic film comprising such polymer.

In U.S. Patent No. 6,939,602, McGee et al. disclose coatings for the adhesive-receiving surface of a two-side coated plastic film label, wherein the film is opaque and the adhesive-receiving skin layer is cavitated and has an open-cell structure. The opposite surface may be surface treated and coated or printed. However, the adhesive-receiving surface is rough (Rₐ>0.5 micrometers (0.5 microns)), which is a method known in the art for imparting block resistance to film structures.

ExxonMobil Chemical Films Europe produces an opaque, top-side printable film (Label-Lyte® 60 LH537) that is coated on the back-side adhesive-receiving surface. The back-side coating formulation, however, is rough and produces a matte finish, to avoid blocking. Such film is unsuitable for use as a clear label.

U.S. Patent No. 5,662,985 to Jensen et al. discloses a two-side coated polymeric label comprising an adhesive-receiving anchor layer and an ink base layer. While this art offers improved performance with a broad range of adhesives, label stock made according to this invention must be handled very carefully and kept cool during storage or blocking will result. Even with careful handling, roll blocking is often severe near the core of large rolls causing significant material losses during a lamination or other handling process. Moreover, even when properly handled, unwinding rolls of such facestock creates an undesirable level of noise pollution and related health hazard in the workplace.

Innovia produces a clear two-side coated printable film (Rayoface® ACPA) that is resistant to degradation in hot or cold water. However, this film, like ExxonMobil's Label-Lyte® 50 LL534 II product, is very sensitive to the temperature at which it is stored, due to tendencies to block. Innovia's product literature cautions against storage at temperatures above 30°C (86°F) or localized heat sources above 40°C (113°F). When transporting film, rolls can see temperatures as high as 60°C (140°F) in the back of trucks or overseas shipping containers unless extra expenses are incurred for temperature-controlled shipping containers.

ExxonMobil Chemical Films Europe provides a one-side-printable, two-side coated, clear film (Label-Lyte® 50 LTG702) that comprises a printable, anti-static coating on the adhesive-receiving surface and a non-printable, acrylic-based coating that provides block and mar resistance and slip on the top-side of the label. The adhesive-receiving layer was primarily designed for hot-melt adhesives used to attach wrap-around labels to beverage bottles. The film is reverse printed on the adhesive-receiving layer. The unprintable top-side surface does not bond inks well in a moist environment and ink appearance is often poor, presumably due to the presence of high levels of antiblock and slip additives. This characteristic also aids with mitigating blocking. Reverse printing relies on the substrate to protect the inks from the rigors of conveyance through packaging lines. However, reverse printing obscures the texture of the printed surface. Printers may often use UV-cured screen inks, for example, to create a textured surface to enhance the appeal of the labeled container to a customer. Reverse printing is also frequently not useful for opaque or cavitated substrates. Moreover, for labels attached to substrates with pressure-sensitive adhesives, it is a common practice in the industry to apply the pressure sensitive adhesive (and its accompanying release liner) before the labels are printed. Therefore, a reverse-printable label is of little use for pressure-sensitive labels. Also, the film becomes hazy when exposed to heat and moisture.

The polymeric labeling industry needs a clear, two-side coated label film that provides robust adhesive anchorage and that will not block to a printable topside coating, particularly over a wide range of temperature and humidity conditions. Moreover, there is need for a two-side coated clear label that maintains acceptable label adhesion, clarity, and "no-label" look after pasteurization, immersion in water or wet environments across a broad temperature range.

### SUMMARY

According to the claimed invention there is provided a coated polymer film in accordance with claim 1 of the appended claims.

Therefore this invention provides a two-side coated polymer film that is printable and does not block. Preferably, the film is a clear film, but use of other substrates, such as opaque or matte polymer films, metal layers and/or paper layers are within the scope of the invention. The coated film is useful as a label film, a packaging film, and/or a graphic-supporting film. The film of this invention may be suitable for use as a label facestock film that may be suitable for use as an adhesive label, such as with pressure sensitive labeling or hot melt roll labeling. For example, after printing, applying adhesive, and applying the label facestock to a container or object, the label can withstand rigorous surface agitation and environmental challenges such as pasteurization and water-bath immersion without adversely affecting the print, adhesion, or clarity. Moreover, adhesives, especially pressure-sensitive adhesives and removable pressure-sensitive adhesives, should remain well anchored to the adhesive-receiving, backside coating under such conditions.

This invention therefore provides a two-side-coated polymer film having usefulness as either a label film or as a packaging film, and having particular usefulness as a clear, pressure-sensitive label film.

Preferred embodiments of this invention may provide film which is a clear label facestock film having improved performance, aesthetic, and optical properties as compared to prior art clear label facestock films. While preferred embodiments are designed for the rigorous requirements of clear labels, the back-side coatings utilized in the claimed invention could easily be adapted for use with matte, opaque, or cavitated white polymer films to provide two-side coated, non-blocking embodiments of such non-clear films. Such versatility may facilitate improved material utilization and production efficiencies during converting and manufacturing by reducing the amount of inventory, cleaning and component replacements needed between product changeovers.

The claimed polymer film may be a label film having an adhesive-receiving coating and that remains clear and may not blush, haze, or otherwise degrade visually or functionally, when exposed to hot water. Also, when the label facestock is removed or repositioned on a release liner or other surface, such as a product or product container, the glue or adhesive will tend to remain adhered to the label facestock and not another surface. Further, rolls of the label facestock can be exposed to a broad range of temperatures, including temperatures greater than 40°C, without destructive blocking.

### BRIEF DESCRIPTION OF DRAWINGS

Figure 1 provides a graphical illustration in one set of experiments based upon the components and conditions set forth therein, of how a pasteurization-resistant adhesive may adhere to various embodiments of back side coatings.
Figure 2 provides a graphical illustration of another set of experiments based upon the components and conditions set forth therein, of how various embodiments of back side coatings may affect blocking to the printable surface of a two-side coated polymer film, following environmental conditioning.
Figure 3 illustrates how exposure to hot water or high pressure may affect the clarity of various coated film embodiments.

### DETAILED DESCRIPTION OF THE INVENTION

The present claimed coated polymer films, which may optionally be label films, and more particularly may be pressure sensitive label facestock films, comprise:
a) a polymer substrate including a first side and a second side; and
b) a back-side coating on the second side of the substrate, the backside coating comprising:
   1) an ionomer comprising from 50 wt% to 98 wt% of one or more carbonyl-free monomers selected from a group consisting of styrene, methyl styrene isomers, halogenated styrene isomers, vinyl chloride, vinylidene chloride, butadiene, acrylonitrile, methacrylonitrile, ethylene, propylene, and butylene isomers; and from 50 wt% to 2 wt% of one or more of a group consisting of acrylic acid, methacrylic acid, crotonic acid, maleic acid, and itaconic acid; and
   2) particles of a water-resistant colloidal mineral, wherein a water-resistant mineral is one that, after it has been applied as a component of a coating composition to a substrate and dried, will not readily reionize in the presence of water, wherein a majority by weight of the particles have a three-dimensional mean diameter of not greater than 0.1 micrometers (0.1 micron), and wherein a majority by weight of the particles have no mean diameter in any dimension of an x-y-z Cartesian coordinate system of less than 0.0005 micrometers (0.0005 micron), wherein a general shape of each of the particles is spherical or cubic, and wherein the particles comprise from 25 wt% to 55 wt% of the back-side coating when dried; and
c) a front-side coating on the first side of the substrate, wherein the front-side coating is printable.

Substrates may be referred to herein as including two sides or surfaces, one on each side of the film substrate. One surface of the substrate may typically be referred to as the top-side, front-side, or print-side of the substrate and is the side that is typically opposite the side of the substrate that is adjacent the article when the substrate is used as a label or opposite a side of the substrate that is adjacent a product when the substrate is used as a packaging substrate. The other surface of the substrate may typically be referred to as the back-side or adhesive-receiving side of the substrate and is typically the side of the substrate that is adjacent the article, product, or the side of the substrate that receives the labeling adhesive when the substrate is used to form a label.

The term "polymer substrate" or "substrate" as used herein may be defined broadly to include any polymer or thermoplastic material comprising one or more monomers as a component thereof, preferably oriented polymeric film structures. The polymer substrate may be monolayer or multilayer films, including oriented, coextruded, and laminated multilayer films, and may preferably be biaxially oriented films. The polymer substrate may also comprise other non-thermoplastic or non-polymeric materials, such as paper, cardstock, and/or metallic or nonmetallic substrates, and/or they may be laminated to such non-thermoplastic materials, such as paper, metallic, or non-metallic substrates. The polymer substrate includes the polymeric portion plus any non-thermoplastic components that make up the structural composition of the substrate. The polymer substrate may include any clear, matte, cavitated, or opaque film. Many preferred embodiments may comprise a clear film with substantially non-matte surfaces.

In some embodiments the preferred polymer substrate is a polyolefin film and more preferably a biaxially oriented, multi-layer or monolayer polyolefin-based film comprising polypropylene, polyethylene, and/or polybutylene homo-, co-, or ter-polymers. Other thermoplastic substrates or layers may also be present within such film embodiments, such as polyesters. However, in other embodiments, the polymer substrate can include substantially any thermoplastic material that forms a thin film that can be employed for packaging, labeling, or decoration. Other exemplary suitable materials may include nylon, polyethylene terephthalate, polylactic acid, and polycarbonate. The contemplated substrates also include coextrudates of the foregoing materials, laminates of any two or more of these materials or interblends of any of the materials extruded as a single base film. Polyolefin homopolymers and copolymers of propylene and ethylene may be most useful in many labeling applications. One particularly preferred polymer substrate that is suitable as a facestock for labeling is a polypropylene-based film containing at least 80 wt. % of isotactic polypropylene in at least a primary or core layer. Exemplary commercially available materials include Exxon 4252 and FINA 3371.

The polymer substrate may be coextruded with at least one skin layer or it may be laminated to at least one other film. Typically, when the film is coextruded the thickness of a skin layer may range from about 2% to about 18% of the total film thickness. Multilayer films having three or more layers, e.g. five layers and sometimes even seven layers, are contemplated. Five-layer films may include a core layer, two skin layers, and an intermediate layer between the core layer and each skin layer, such as disclosed in U.S. Patent Nos. 5,209,854 and 5,397,635. The skin layers may include a copolymer (i.e., a polymer comprising two or more different monomers) of propylene and another olefin such as ethylene and/or 1-butene.

Another exemplary preferred substrate is a multilayer polypropylene film comprising at least one of polyethylene, polypropylene, copolymer of propylene and ethylene, copolymer of ethylene and 1-butene, terpolymers of any of the foregoing and maleic anhydride modified polymers. Another useful substrate comprises polypropylene interblended with a minor proportion of at least one of polyethylene, copolymers of ethylene and an alpha olefin, copolymers of propylene and an alpha olefin, terpolymers of olefins and maleic anhydride modified polymers. Multilayer, white opaque, cavitated polypropylene-based films may also be a useful substrate. Such films are described in U.S. Patent Nos. 4,758,462, 4,965,123, and 5,209,884.

The polymer substrate may also be treated and/or metallized on at least one side. Many preferred polypropylene polymer-film embodiments may be treated on both sides to improve adherence of the print-side coating and the adhesive to the adhesive-receiving surface. Treatment may typically comprise corona, plasma, or flame treatment. In some embodiments, treatment may also comprise applying a primer to a surface of the polymer film to improve coating adhesion. Such treatments may facilitate uniform wetting of the coatings and/or increase surface energy to improve coating anchorage to the substrate. The surface treatment typically may be applied after orientation, "in-line" on the coating equipment, though primers may typically be applied using coating equipment. Some embodiments may possess skin layers that do not require surface treatment for acceptable coating, ink, or adhesive adherence, such as layers comprising copolymers of ethylene and/or homopolymers of polyethylene, e.g. medium or high density polyethylene. Metallization may be by vacuum deposition of aluminum or other metals. A print-face coating and printing ink may also be applied to the metallized or treated surface.

The films employed may be uniaxially oriented, or simultaneously or sequentially biaxially oriented. A typical range of orientation is from 4 to 10 times in the machine direction and from 7 to 12 times in the transverse direction. Oriented film thickness may typically range from about 10 micrometers (10 microns) to about 100 micrometers (100 microns).

The most advantageous features of this invention may be most evident and may have the greatest applicability with polymer substrates that are substantially clear. Such substrates may typically have haze values of less than 5%, more preferably less than 3%, and most preferably less than 2%. Haze can be measured with a Haze-gard Plus™ instrument manufactured by Byk-Gardner USA, Columbia, MD, consistent with ASTM D 1003 guidelines.

### Front-Side (Printable) Coating

The front-side of the polymer substrate according to the present invention includes a printable coating. The coating need not actually be printed. It is only necessary that the front-side surface of the polymer substrate support a coating having sufficient surface energy that if desired, the printable surface should provide acceptable adherence and appearance for a printing ink. For reference purposes, the front-side surface of the polymer substrate may be referred to herein as a "first-side" or "print-side," even though that side may not actually be printed. A "printable" coating may be defined as any coating for which a printing method could be used to apply printing ink upon such coating, after the coating is dried or cured, such as by screen printing, letterpress, offset, flexographic, gravure, laser, or ink jet. Printing inks may include one- and two-component inks, oxidatively-cured inks, and radiation-cured inks, aqueous- or solvent-based dissolved inks, aqueous- or solvent-based dispersed inks, and 100% ink systems. Such surface may be considered printable if it passes tests related to each of (i) ink adhesion and (ii) inking quality.

With respect to the ink adhesion test, the coated surface may be considered printable if three repeated pulls of testing tape applied to the coated front-side of the polymer substrate (Scotch® 810 made by 3M, St. Paul, MN, or the equivalent) does not remove more than 50% of the ink or metal, after the ink or metal is completely dried, cured, and/or conditioned for the intended use. The printable surface, according to this invention, comprises the front-side coating and any combination of surface treatment or primer applied to the polymer substrate or coating (before and/or after coating) known in the art. For example, it is a common practice for label printers to corona treat a coated surface before ink is applied, to enhance ink wet-out and adherence.

With respect to the test for evaluating printability in terms of inking quality, many tests are known in the art that involve printing test plates on a given press. However, it is convenient to have lab-scale tests for quick screening purposes. It is beyond the scope of this disclosure to define lab-scale criteria for all types of inks. However, a reliable test may be performed using a UV-screen and UV-flexographic inks. In particular, it may be useful to determine percent light transmittance through various samples after inking, as measured with a BYK-Gardner Haze-gard Plus (obtained from Byk-Gardner USA in Columbia, MD) to define "printability." Light transmittance will vary with respect to ink lay down or wet-out. For UV-screen inks a 355.34.PW screen (supplied by Nor-Cote International, Inc., Crawfordsville, IN) and a squeegee may be used to hand apply Nor-Cote opaque black screen ink to a 7.62 cm by 7.62 cm (3 -inch by 3-inch) patch on the coated surface of a target film surface, such as Label-Lyte® 196 LL B2, which has greater than 94% light transmittance before printing. For purposes of this invention, a surface was considered "printable" if light transmittance in the inked area is less than 10% and if ink adhesion was satisfactory. Some inks will de-wet or mottle when applied to undesirable surfaces. When severe de-wetting occurs higher light-transmittance values will be obtained. Both the test screen and the black screen ink may be obtained from Nor-Cote International, Inc. For UV-flexo ink, a "Little Joe" offset proofing press (Model HD98) with an HD8100 compressible lithographic blanket from Little Joe Industries, Belle Mead, NJ, was used to apply Flexo-Cure Gemini process cyan UFG 50080 from Akzo Nobel Ink AB, Trelleborg, Sweden. In this printing test, ink was transferred from a Precision Gage & Tool Co. (Dayton, OH) steel plate to the test substrate. Prior to the ink transfer, the steel plate was covered with a layer ink that was 0.4 mils thick in the transfer zone. The transfer creates a 7.62 cm by 17.78 cm (3-inch by 7-inch) printed block. A sample was considered "printable" if the percent light transmittance was less than 60% in the area coated with the blue ink and if ink anchorage was satisfactory as discussed above in the tape test. Screen and flexo inks were cured by passing the inked samples through a Fusion UV unit from Fusion UV Systems, Inc., Gaithersburg, MD at 50.8 cm/s (100 feet per minute). A minimum of two passes through the UV unit are required to achieve the desired level of ink curing.

Preferred printable coatings for the first side of the polymer substrate provide excellent anchorage for inks, including radiation curable inks, such as ultra-violet ("UV") radiation cured inks, and many other types of inks such as discussed below. To provide a durable, scratch resistant, or mar resistant print-surface on the film, many preferred embodiments are coated with a coating that offers such properties, such as cross-linked or cured coatings. Preferred coating embodiments may also resist attack by isopropyl alcohol (IPA) and hot water. Examples of such coatings are described by McGee in U.S. Patent No. 6,893,722, Touhsaent in U.S. Patent No. 6,844,034, and Servante in U.S. Patent Application No. 20050112334. In many preferred pressure sensitive label embodiments, the coatings described by McGee in U.S. Patent No. 6,893,722 may be especially preferred, as they may provide a durable, pasteurizable, printable, front side for the inventive polymer film. Other suitable front-side coatings may include acrylic-based coatings and other water- or solvent-based printable coatings that are substantially clear when dry. The front-side coatings may be applied by any means known in the art, such as direct gravure, reverse-direct gravure, offset, spraying, or dipping.

### Back-Side (Adhesive-Receiving) Coating

The films according to the present invention also include a back-side coating on a second side of the polymer substrate to serve as an adhesive-receiving coating and to prevent blocking with the printable front-side coating and/or inks. The clear, back-side coating comprises at least an ionomer component and a colloidal mineral component. Optionally and often preferably, the back-side coating also comprises a cross-link agent to cross-link the ionomer component. The colloidal mineral component includes a mineral material that is water-resistant when dried.

According to IUPAC provisional nomenclature recommendations, an ionomer is a polymer in which a small but significant proportion of the constitutional units have ionic or ionizable groups or both. The ionomer used in the claimed invention is a polymer comprising from 50 wt% to 98 wt% of one or more carbonyl-free monomers from the group consisting of styrene, methyl styrene isomers, halogenated styrene isomers, vinyl chloride, vinylidene chloride, butadiene, acrylonitrile, methacrylonitrile, ethylene, propylene, and butylene isomers copolymerized with from 50 wt% to 2 wt% of one or more of the group consisting of acrylic acid, methacrylic acid, crotonic acid, maleic acid, and itaconic acid. In addition to the copolymer components, the ionomer may also comprise other polymers or components therein.

Some preferred embodiments may include an ionomer that comprises a copolymer including from about 65 wt% to about 95 wt% of at least one of ethylene, propylene, and butylene and from about 35 wt% to about 5 wt% of at least one member of the group comprising acrylic acid, methacrylic acid, and crotonic acid. Michem®Prime 4983R, available from Michelman Inc., Cincinnati, OH, is an example of a suitable ionomer and is a polymer dispersion comprising ethylene acrylic acid in aqueous ammonia. Preferred embodiments for the dried back-side coating may comprise from about 30 wt% to about 80 wt% of ionomer when the back-side coating is dried on the back-side of the polymer substrate. A more preferred range may be from about 40 wt% to about 70 wt% ionomer in the dried back-side coating.

In some preferred adhesive-receiving back-side coatings, the coating includes at least one cross-linking agent, preferably a carboxyl-reactive cross-linking agent. Exemplary carboxyl-reactive crosslinking agents may include coordinating metal compounds, aziridine, aminomethylol, alkylated aminomethylol, isocyanate, blocked isocyanate, epoxy, melamine-formaldehyde, oxazoline, and silane derivatives. The cross-link agent may be provided at a level that is sufficient to cross-link from about 5% to 35% of the acid groups present in the ionomer. A more preferred range may be to cross-link from about 10% and about 30% of the acid groups in the ionomer. A still more preferred range for the cross-linker would be an amount sufficient to cross-link from about 15% to about 25% of the acid groups in the ionomer component. Preferred carboxyl-reactive cross-linking agents may include ammonium zirconium carbonate (AZCote® 5800M manufactured by Hopton Technologies, Inc., Rome, GA) and poly-functional aziridine (CX 100™ made by DSM NeoResins, Waalwijk, The Netherlands). In still other embodiments, the ionomer used in the backside coating may comprise a self-crosslinking ionomer or ionomer composition.

The back-side coating also includes a colloidal mineral component. The colloidal mineral component may function after the back-side coating has been applied to the second side of the polymeric substrate and dried thereon, to provide a stratum of anchored, colloidal-sized, mineral particles to which a labeling adhesive can bond. The relatively high surface area and high surface energy of the mineral particles may facilitate a strong bond between the back-side coating and the adhesive or other surface or material to which the back-side coating may be applied. However, the relatively small, colloidal particles scatter or reflect very little light, thereby facilitating a relatively clear, coated film.

The mineral component may preferably comprise a colloidal particulate dispersion of at least one of silica, alumina, titanium dioxide, calcium carbonate, sodium magnesium fluorosilicate, synthetic sodium hectorite, white bentonite, montmorillonite, alkaline polyphosphates, talc, alkaline silicate salts, water glass (salts of potassium, lithium, and/or sodium, such as sodium silicate), surface-modified silica, surface-modified alumina, surface-modified titanium dioxide, surface-modified calcium carbonate, surface-modified talc and mixtures thereof. Exemplary suitable alkaline polyphosphates may include at least one of tetrasodium pyrophosphate, sodium hexametaphosphate, sodium tripolyphosphate, disodium acid pyrophosphate, hexasodium tetra-polyphosphate, and tetrapotassium polyphosphate, including mixtures thereof.

For purposes of this invention, the term "colloidal" pertains to a dispersion comprising mineral particles that have a mean particle diameter within a range of from 0.5 nanometers (0.0005 micron) to 100 nanometers (0.1 micron). Specifically, a majority by weight of the particles have a three-dimensional mean diameter of not greater than 0.1 micrometers (0.1 micron), and wherein a majority by weight of the particles have no mean diameter in any dimension of an x-y-z Cartesian coordinate system of less than 0.0005 micrometers (0.0005 micron). The particles have a general shape that is spherical or cubic. Thus, the term "mean diameter" can effectively describe the particle in terms of a diameter. However, the particulate industries often tend to continue to use the term "mean diameter" to describe those particles having relatively large aspect ratios. Determining the mean diameter of a particle having relatively large aspect ratios may become difficult, particularly where the particles may possess a highly irregular shape. For purposes herein, to facilitate a more definite understanding of described particle sizes, the size of colloidal particles is described in terms of mean diameters in three dimensions of an X-Y-Z Cartesian coordinate system.

Regarding the size characteristic, the colloidal mineral particles that are suitable for use with the back-side coating of this invention include those particles wherein a majority by weight of the individual colloidal particles have an overall (three-dimensional) mean diameter of not greater than 100 nanometers ("nm") (0.1 micron), preferably not greater than about 50 nm (0.05 micron) and more preferably not greater than about 25 nm (0.025 micron). It is also the case that a majority by weight of such colloidal particles have no mean diameter in any one dimension of less than 0.5 nm (0.0005 micron).

In some embodiments, the back side coating may comprise a mixture of colloidal particle geometries. It is preferred that a majority by weight of such colloidal particles have no mean diameter in any dimension of less than about 1.0 nm (0.001 micron).

Various mineral particulates that may be suitable as an additive with polymer film structures and coating formulations may naturally possess surface energy that ranges from relatively high to relatively low. Some of the minerals having a relatively lower natural energy may be treated to increase the surface energy, if desired, and render the mineral more hygroscopic. Others of the minerals having a relatively higher natural surface energy may be treated, if desired, to reduce the surface energy and render the mineral more hydrophobic.

The claimed invention requires the use of particles of a water-resistant colloidal mineral. By using colloidal mineral components that are in the water-resistant portion of the water-resistance spectrum, the labels may demonstrate prolonged bonding and container adherence when exposed to humid and/or wet environments, e.g., ice chest immersion and steam pasteurization.

The colloidal minerals for use in the claimed invention are those colloidal minerals that tend to be essentially water resistant or water-insoluble, after the dispersing medium is dried. A water-resistant mineral is one that, after it has been applied as a component of a coating composition to a substrate and dried, will not readily reionize in the presence of water.

With respect to colloidal minerals that tend to be essentially water resistant, some preferred materials may include, for example, ammonia-stabilized colloidal silica (Ludox® AS30 and Ludox® AS40, made by Grace Davison, Columbia, MD), which has nominally spherical particles having a mean size of about 0.022 micron (22 nanometers); and precipitated calcium carbonate (Multifex-MM, made by Specialty Minerals, Inc., Bethlehem, PA), which has rhombohedra particles with a mean particle size of about 75 nanometers (0.075 micron). Smaller particle sizes tend to be preferred to maintain improved clarity in the dried coating, but slightly larger particles can help to mitigate blocking and can provide larger particulate surfaces to bond with the adhesive. Blends of colloidal materials of varying sizes (but within the size range of 100nm (0.1 micron) to 0.5 nm (0.0005 microns) that balance these properties may be used advantageously to tailor the coating to the desired use or application.

The claimed invention uses only water-resistant colloidal minerals in the adhesive-receiving coating. There is between 25 wt% and 55 wt% inorganic colloidal material in the dried coating. To provide suitable blocking resistance between the back-side coating and the printable front-side coating, it may be advantageous in some preferred embodiments to maintain a wt% ratio of ionomer to colloidal mineral component of >1.0 (about the same or more wt% ionomer than wt% mineral).

Insolubilizing agents may optionally be included in the back-side coating. Some preferred insolublizing agents may include aqueous anionic polymer dispersions containing carbonyl-reactive amine and/or hydrazine functional groups. Several polymers of this type are known in the art: U.S. Patent Nos. 6,730,733, 6,610,784, and 6,555,625 to Overbeek, et al.; U.S. Patent No. 6,362,273 to Martin et al.; European Patent No. 0341886 to Overbeek; and European Patent No. 0630388 to Satgurunathan. Other preferred insolublizing agents include NeoCryl™ XK-90 and NeoCryl™ XK-176, made by DSM NeoResins.

In this regard, since the insolubilizer may in some instances improve adhesive anchorage, the insolubilizer may be used in blends containing colloidal minerals such as Ludox® AS40 (Grace Davidson, Columbia, MD), which tend to be water resistant upon drying without requiring the presence of an insolubilizer. In such case, the lower limit of the recommended insolubilizer-to-mineral ratio may approach zero, e.g., very little insolubilizer. The upper limit for this ratio may be 2.5, or 2.25, or 2.The insolublizers disclosed in this invention may tend to increase blocking between the back-side coating formulation and some front-side coatings if too much insolubilizer is present.

In the claimed invention, where the back-side coating includes ionomer blends with water-resistant colloidal minerals, the preferred ionomer content is close to 53%, which is close to the middle of the preferred ranges expressed for ionomer.

Coating thickness or weights are determined by a number of factors, including the targeted use of the film, coating viscosity, film wetability, and method of application. Economic factors may influence the upper limits of the back-side coating thickness. One important consideration with respect to application of the back-side coating is the need in many embodiments for complete surface coverage on the back-side surface of the polymer substrate. In many embodiments, preferred application weights for the back-side, adhesive-receiving coating range from about 0.1 g/m² and 1.0 g/m² and often more preferably within a range of from about 0.3 g/m² and 0.8 g/m².

### Optional Components of the Back-Side Coating

The adhesive-receiving, back-side coatings described herein may also include one or more additional components, such as coating-process facilitating adjuvant, nonionic wax dispersion, anionic wax dispersion, nonionic slip additive, anionic slip additive, rosin ester, or security taggants. Usage of such additives, some of which are further discussed below, may be known to those skilled in the art.

Coating-process facilitating adjuvants include materials that may aid the coating process, such as defoamers, wetting agents, and lubricants. For example, the coating composition, when applied to the substrate layer, may not "wet out" uniformly, especially when such materials are applied lightweight or as thin layers. As a result, the uncured liquid coating mixture may retract into droplets due to interfacial and surface tension forces, such that the dried coated layer might contain a network of uncoated areas. Since some print-face coatings may tend to block strongly to treated plastic surfaces, the coating formulations for the adhesive-receiving layer preferably should be free of uncoated voids or else spot blocking may be observed. Adding a small amount, such as for example, about 0.1 wt% to 0.2 wt% of the wet coating formulation, of surfactant such as Genapol UD 050 (Clariant Corporation, Charlotte, NC) or Tergitol 15-S-9 (Union Carbide, Danbury, CT) may prevent wetting issues on a treated plastic surface.

Also, high-speed application of some coating formulations can sometimes generate foam. A defoamer may help control or inhibit such occurrence. Volatile defoamer additives may sometimes be preferred over nonvolatile defoamers and surfactant-like wetting aids. Ethylene glycol monohexyl ether (commercially available as Hexyl Cellosolve® from Union Carbide) may aid wet-out of the coating on the plastic substrate and help control foam. Other alcohols and glycol ethers like Dowanol® PM made by Dow Chemical Company may also be suitable. Typically the wet coating formulation can comprise from 0.1 wt% up to about 10 wt% of such processing additives.

Nonionic or anionic wax emulsions may also improve blocking resistance and/or lower the coefficient of friction. For example, an emulsion of Michem® Lube 215, produced by Michelman, Inc., may be compatible with either the back-side or front-side coating formulations of this invention, if needed. Typically, however, such materials are unnecessary.

Slip additives may also occasionally aid processing. Suitable slip additives may include wax or synthetic particulates, such as Nippon Shokubai's Epostar® poly(methyl methacrylate) (PMMA) spheres that are about 1000 nm to 6000 nm (1 to 6 microns) in diameter, dispersed in water or alcohol, and containing a small amount of nonionic or anionic surfactant to aid dispersion. Also, some coating formulations may benefit from addition of dispersed, non-meltable, poly(monoalkylsiloxanes), having an overall mean particle size of from about 5.0 nm (0.5 micron) to about 2000 nm (20 microns), with a three-dimensional structure of siloxane linkages. Such materials are commercially available from Toshiba Silicone Co., Ltd. and marketed under the trade name Tospearl®. Inclusion of such particulates, if needed, at a level of less than about 1 wt% may assist with non-blocking, without undesirably compromising clarity and optical effects. Other particulates, such as submicron clays having a mean particle size of between about 200 nm (0.2 micron) and 1000 nm (1.0 micron) (e.g., kaolinite clays such as Lithosperse® 7015 HS and 7005 CS by Huber Engineering Minerals) may also impart supplemental antiblock properties to the film if needed, so long as the concentration and/or size of such particulates do not undesirably interfere with film clarity or optical effects (e.g., with matte or opaque embodiments). However, many preferred embodiments, particularly clear embodiments, may not include any antiblock particulates.

Rosin esters may be included in the back-side coating formulation to improve coating solution flow and leveling, and enhance adhesive anchorage to the coating in damp or wet conditions. Exemplary additives include Resinall S07, made by Resinall Corporation, from Severn, NC, and may be incorporated into the coating formulation at levels of up to 10 wt%, but more preferably at levels of less than about 5 wt%. This material may preferably be dissolved in a solution of water containing ammonia. Alternatively, Resinall 80715 may be purchased, which is a 15% ammoniacal solution of Resinall 807.

According to some preferred embodiments, a functional label may be prepared from the two-side coated film according to this invention, (a label facestock), by applying an adhesive to the coated, adhesive-receiving side of the film. The label facestock according to this invention may be coated with a pressure-sensitive adhesive or a pressure-sensitive adhesive may be transferred to the coated adhesive-receiving surface from a combined release liner. Alternatively, a releasing film or sheet consisting of a releasing agent can cover such pressure-sensitive adhesive layer when the adhesive layer is applied to the label facestock.

In some circumstances it may be advantageous to apply a primer to one or both sides of the substrate before applying the printable coating and/or the back-side adhesive-receiving coating. Generally, any primer layer commonly used in the art, could be used and included in films according to this invention, so long as the chosen primer bonds adequately to the polymer substrate and coating formulation when exposed to conditions of intended use, such as hot water. Exemplary primers may include water-based epoxies prepared and applied according to Steiner, et al. in U.S. Patent No. 4,214,039 and cationic amino-functional polymers described by McGee in U.S. Patent No. 6,596,379. Other specific examples may include amino-functional acrylics such as NeoCryl™ XK-90 or water-based urethanes like NeoRez R-600, manufactured by DSM NeoResins (Waalwijk, The Netherlands). Preferred embodiments, however, do not require a primer layer on either surface of the polymer substrate. Generally, inclusion of primers in the structure could unnecessarily add cost and increase product complexity. If used, primer layers should be relatively thin, with application levels yielding between about 0.05 g/m² and 1.0 g/m² of dried primer. A more preferred range for primers maybe between 0.1 g/m² and 0.5 g/m².

Methods for preparing the film compositions described herein may include the steps of extruding, laminating, or otherwise producing or preparing a polymer substrate, applying the described back side coating to one side of the substrate, applying the front side coating to another side of the substrate, applying a primer to either or both surfaces of the substrate, applying an adhesive to the back side coating, applying a liner supporting an adhesive to the back side coating, rolling the back side coated film into rolls, preparing the films for use as label facestocks, and preparing labels from the printable back-side coated substrates. The methods may also include one or more of the steps of i) printing the first side of the polymer substrate, ii) printing the second side of the polymer substrate, such as by reverse printing, iii) printing on an outer surface of the dried front-side coating, and iv) printing on an outer surface of the dried back-side coating, such as by reverse printing. The front side coating need not actually be printed, rather it is only required that the front side is printable, as described above in more detail. The films may be prepared into label stacks or rolls of labels, either with or without an adhesive and liner. Articles, such as containers, packages, graphic displays, or other media can be produced that support a label as described herein or a coated polymer film according to this invention.

### TEST METHODS FOR EXAMPLES

### One-Hour Blocking Test

This test involves matching various combinations of printable coated surfaces (e.g., top-sides or first sides) with coated adhesive-receiving surfaces (e.g., back-sides or second sides). 150mm (six-inch) long by 100mm (two-inch) wide test samples are placed between a pair of 50 mm by 100 mm (2-inch by 4-inch) (50 mm by 100 mm) chrome-faced metal plates that are ~6 mm (0.25 inches) thick. Sample portions that extend beyond the plates provide space for sample identification. Each sample (comprising two pieces of film with a printable or tops-side surface facing an adhesive-receiving or back-side surface) has annealed aluminum foil (25.4µm (0.001-inch thick)) above and below it. The foil prevents pairs of test samples from sticking together. If exterior surfaces of a test pair have coating(s) comprising ionomer, as is the case with the adhesive-receiving layer according to this invention, a piece of 70 SPW (manufactured by ExxonMobil Films) polymer film is placed between the test pair and the foil (treated surface toward the foil) to prevent the ionomer from blocking to the foil. A stack containing up to 48 pairs of test samples (interleaved with aluminum foil and 70 SPW) can be placed between the metal plates.

The plates containing the stack of test samples are placed into a Carver Press, Model C (Carver, Inc., Wabash, IN) equipped with temperature controlled platens. Tests are normally conducted at the warm temperature of either 60°C or 52°C. When the plates have been centered on the platens of the press, force is applied to produce 2722 ± 90.7 kg (6000 ± 200 lb) of force between the platens. Since the surface area of the samples is 8 in² (∼52 cm²), the effective pressure on the samples is about 52 ± 1.76 kg/cm² (750 ± 25 psi (52 ± 1.76 kg/cm²). This pressure is held constant for one hour. After the prescribed time, the pressure is relieved and the warm samples are removed (using proper protective equipment) and separated by carefully peeling the foil away from each test pair. The slip film (e.g., 70 SPW), if used, is not removed from the test pair. The samples typically cool quickly after separation from the foil.

Each test pair can then be mounted into the jaws of a Sintech Tensile Tester (made by Instron, Norwood, MA), that is set for a cross-head speed of 12.7cm/min (5 in/min) to peel the adjacent layers of each sample set apart and determine blocking effects, if any. During the peel, the operator should hold the sample at about 90° to the peel direction. For each test, the cross-head travels two inches, but to avoid edge effects, the software only bases its calculations on data gathered for separation distances between 6.3mm (0.25 inches) and 48.3mm (1.9 inches) from the leading edge. In addition to the mean peel (blocking) force, the software also calculates the mean force for the peaks (P) and valleys (V). Besides having a low blocking force, it is also desirable for the difference between the peaks and valleys (P-V) to be small. Two-side-coated rolls having large P-V values may unroll or unpeel rather erratically across the web, thus tending to create a lot of noise and vibrational distortion. This test thus provides a relatively quick and straightforward means of observing blocking under prescribed conditions.

### In-Roll Blocking Test

This test, while qualitative, evaluates rolls that have been coated on both sides. Two-side-coated samples were prepared by coating 152.4 cm (6-inch wide) film on a Talboys™ lab coater (Talboys Engineering, Emerson, NJ). To avoid back-side treatment during top-side treatment, the top side of the sample polymer web is corona treated during the first pass through the coater to render it printable, without a top-side printable coating. In the second pass through the coater, a 130-Quad gravure cylinder with a flooded nip is used to apply coatings to the adhesive-receiving side of the film with in-line surface treatment. Finally, during a third pass through the coater, a coating is applied to the print face without any additional treatment. The line speed is typically 10.7-12.2 m/min (35-40 feet/min), and the coatings are dried with an oven temperature of 105°C. Rolls are wound onto three-inch cores, and enough sample is prepared so that the finished two-side coated roll has about 90 to 110 wraps of film on the core. Tension control is fairly crude on the coater, so it is desirable to make all the rolls using the same settings to minimize variations.

Sample rolls are then aged for various lengths of time, usually at least 24 hours, at room temperature. To simulate the slitting process, samples are rewound by passing the film through the coater again, without applying any additional heat, treatment, or coatings. Samples that did not block are then placed in a warm room at 52°C and low humidity (-10%) for 16 to 24 hours. After removing the samples from the warm room, they were allowed to cool for at least an hour before they were rewound on the lab coater again. The ease or difficulty of unwinding is observed. A qualitative value ranging from 0 to 5 is assigned, wherein "0" is best or no blocking and five is worst, meaning severe blocking. Based on correlations with the one-hour blocking test and field experience, a rating of "1" indicates some noticeable but very minor blocking, while a rating of "2" may represent a relatively small amount of blocking that, while acceptable, could present problems only in demanding applications, such as high speed operations. A rating of "3" will unroll in a manner that may be acceptable in applications that can tolerate some moderate blocking. A rating of "3" or lower is generally considered acceptable for commercial fitness for use in many common label facestock applications. A "5" rating means that the sample will tear before it can be rewound down to the core, while a rating of "4" indicates intermittent tearing or unacceptable blocking for most commercial operations. This blocking test tends to be conservative on the severe side, as rolls made on the subject coater tend to be more tightly wound than many rolls produced commercially.

### Pasteurization Evaluation Test

This test evaluates two properties of coated structures: resistance to blushing in hot water and the ability to retain anchorage to a pasteurization-resistant adhesive in a hot and wet environment. A piece 7.62 cm x 7.62 cm (3" x 3") of commercially available, clear PSA label facestock (e.g., OptiFLEX® PP 200 H Clear made by FLEXcon, Spencer, MA) is removed from its liner and applied to the adhesive-receiving layer of a test sample, which is typically about 12.7 cm x 12.7 cm (5" x 5"). The adhesive on the OptiFLEX® PSA facestock is a permanent adhesive that typically maintains strong anchorage to the surface of the clear PSA facestock to which it is applied, even in the presence of hot water. Two replicas of each sample were placed in stirred hot water (∼90°C) for 15 minutes. One edge of the commercially available PSA facestock was folded over to make it easy to grab.

After the allotted time in the hot water, the samples are removed from the water and the commercially available PSA facestock is quickly pulled by hand, away from the test sample. The relative ease with which the commercial PSA facestock is removed from the adhesive-receiving layer of the test sample is noted. If the bond to the adhesive-receiving layer of the sample remains very good, the commercially available PSA facestock web either tears or the adhesive is transferred or completely removed from the commercially available PSA facestock to the test sample. Poorly bonded samples may be separated relatively easily from the commercially available PSA facestock, which retains most or all its adhesive. It is preferable to make the separation within a few seconds of removing the sample from the hot water, because if the sample cools or dries, an artificially favorable result might be obtained. This test approximates the relative resistance of pressure-sensitive labels to flag or fall off containers during vigorous surface agitation in a pasteurization process, due to adhesion weakness between pressure-sensitive adhesive and the adhesive-receiving surface of the label facestock.

In the area of the test sample not covered by the commercially available PSA facestock, a visual assessment of clarity is made after the sample is dried. Samples that become cloudy or milky are deemed unacceptable. For a more quantitative assessment of coating clarity after pasteurization, experimental samples are placed in boiling water for ten minutes. Samples are removed from the water and the water on the sample removed by patting gently with clean paper towels. Samples are allowed to completely air dry on a bench top and then haze values are measured and compared to initial haze values. As noted previously, haze is measured with a Haze-gard Plus™ instrument manufactured by Byk-Gardner USA, Columbia, MD.

### Pressure Sensitive Adhesive Evaluation

Interactions between back-side coating and different types of pressure-sensitive adhesives may be evaluated by an independent party, such as Rohm & Haas, in Spring House, PA. Samples may be submitted to Rohm & Haas and tested with their proprietary blends of a repositionable (shelf-marking) adhesive (Robond® PS-9260) or a removable adhesive (Robond® PS-8120HV), both of which are susceptible to having their anchorage weakened by exposure to warm and moist conditions.

The test method involves applying an adhesive to a release liner, followed by transfer-coating the test adhesive to the adhesive-receiving, coated surface of the sample polymer substrate to be evaluated. The adhesive coating weight is typically about 20 ± 1 g/m². After peeling away the release liner, the adhesive coated sample is then attached to a test surface (e.g., stainless steel, aluminum, or poly[vinyl chloride]). After conditioning, the peel force required to remove the sample label from the test surface is recorded and the mode of failure noted. It is usually desirable for the adhesive to remain with the facestock after removal. It is also usually desirable for the adhesive to separate from the test surface without "legging." Legging describes the tendency for an adhesive to form elastic filaments or threads when the adhesive is separated from another surface.

### Hot-Melt Curl Test

Hot-melt pressure-sensitive adhesives are commonly employed to attach plastic labels to bottles. Labels that have no coating on the back or labels having a non-curl-resistant coating can curl due to the migration of hydrocarbon oils from the hot-melt adhesive into the plastic substrate. Up-curl (that is, curl that is concave on the print side) is usually most undesirable. This type of curl can interfere with dispensing and, in severe cases, can cause the label to peel away from the container.

To measure curling tendencies, a sample of MACtac® 710 VHP hot-melt adhesive may be positioned between two sheets of release liner (one brown and one white). Test sheets of the adhesive sandwich are cut into 76 mm x 76 mm (3" x 3" (76 mm x 76 mm) squares. For each test sample, the brown release layer is removed from the adhesive sandwich, with the adhesive still attached to the white release substrate. A piece of test film having the experimental adhesive-receiving surface (approximately 102 mm x 102 mm (4" x 4" (102 mm x 102 mm)) is overlain onto the exposed hot melt adhesive on the white release liner. Using finger pressure, intimate contact is established between the holt-melt adhesive and the back-side coating. Scissors may be used to trim the excess clear label stock away from the edges of the release liner.

Two replicas for each test sample are placed in a manila envelope and placed between two unopened reams of paper weighing approximately five pounds each. The stack is stored and conditioned at ambient temperature for a specified time, usually about one week. After conditioning, the samples are removed and the release liner peeled away from the adhesive. This results in the transfer of the hot-melt adhesive to the adhesive-receiving surface of the clear, experimental label film. The clear sample with the exposed adhesive is carefully centered onto the edge of a grounded (to dissipate any static effects) metal plate. After the sample is horizontally positioned on the vertically mounted metal support, the vertical heights at the outer edges of the conditioned film sample are measured from a fixed reference point. To correct for gravitational effects, substrate stiffness, and so on, a replicate sample with no significant conditioning time (<5 minutes) should be mounted and measured in the same way. By subtracting the height of the unconditioned sample from the height of the conditioned samples, the net amount of up-curl (>0) or down-curl (<0) that occurred as a result of or following conditioning can be measured and evaluated. For samples of this size, a net curl of between -5 mm and +1 mm typically represents a functional range. Too much down-curl or up-curl may cause dispensing or other processing problems.

### EXAMPLES

### Example 1

The comparative example demonstrates that two-side-coated clear or opaque polymer films known in the prior art (such as taught by McGee et al., in U.S. Patent No. 6,939,602) may exhibit a number of application-limiting issues, including blocking, unwinding noise, haze, coating transfer, and failure of a coating and/or adhesive to bond acceptably with a polymer substrate. Each of these issues should be considered carefully when evaluating acceptable candidates for a particular film application. The following inorganic coating (sans ionomer and sans cross-link agent) was applied to the back-side, adhesive-receiving surface of a 15.24cm (six-inch) wide roll of each of 196 LL B2 (a clear polymer film) and 60 LH247 (a cavitated opaque polymer film) made by ExxonMobil Films, as described above for the In-Roll Blocking Test:

| | |
|---|---|
| Water to achieve 15% solids - | 124.8 g |
| Wetting agent surfactant - Genapol UD 050 (Clariant Corp.) - | 0.2 g |
| Ammonia-stabilized, water-insoluble colloidal silica - Ludox AS40 - | 75.0 g |

Using art taught by McGee in U.S. Patent No. 6,893,722, the following print-face coating was prepared and applied at between 0.1 and 0.3 g/m² to the print face of each of the 196 LL B2 (clear) or 60 LH247 (cavitated) samples, made by ExxonMobil Films, as described above for the In-Roll Blocking Test:

| | |
|---|---|
| Water to achieve 6% solids - | 209.0 g |
| Wetting agent surfactant - Genapol UD 050 (Clariant Corp.) - | 0.3g |
| Acetoacetoxyethyl methacrylate (Sigma-Aldrich) - 0.7g (yields ethenic unsaturation in the dried polymer) | |
| R1117 XL (W. R. Grace) - 36.0 g (self-cross-linking cationic acrylic emulsion) | |
| PMMA slip additive - 2% Epostar® MA-1002 (Nippon Shokubai) - | 1.7 g |
| PMMA slip additive - 2% Epostar® MA-1006 (Nippon Shokubai) - | 1.7 g |
| Denacol EX-851 (Nagase) - 1.1 g (difunctional epoxy cross-linking additive) | |

Initially, the samples demonstrate good bond between the back-side coating formulation and both sample polymer substrates. Attempts to remove the back-side, inorganic coating from the polymer substrates with Scotch® 600 tape (3M, St. Paul, MN) resulted in the tape adhesive being pulled away from the tape backing and transferred to the back-side coating. Similar results were obtained immediately after the above discussed Pasteurization Evaluation, indicating that the inorganic back-side coating of this comparative example bonds strongly to the polymer substrates, even in a hot and wet environment. Also, after aging the coated samples in a relatively low (ambient) humidity hot room, per the In-roll Blocking Test, it was possible to unroll both the clear and the cavitated samples down to the core without tearing the polymer web. The amount of noise or hissing during the rewinding operation was relatively low for the clear sample (a "1" rating), suggesting, at least initially, that the clear sample did not block. However, the coated cavitated film sample was noisy and the unwind force was high. Although there were no web breaks, it was given a blocking rating of "4." This suggests that the back-side coating formulation of this example is likely unsuitable for use with a cavitated substrate that may be exposed to a warm environment.

Referring again to the coated clear sample, although the initial test results may suggest that there was little or no blocking, additional testing revealed that following exposure to a warm environment, the back-side coating had instead failed by loss of bonding to the substrate and transferred easily to the top-side of the film. Although during unwinding, the unwinding force and noise were apparently within the acceptable range, the coating had instead lost bond or degraded its bond to the substrate. The coating transfer was confirmed by tape tests. Tape tests conducted near the core of the roll, on the back-side of the substrate, revealed that little or no tape adhesive transferred from the Scotch® 610 tape to the back-side of the substrate, suggesting that the inorganic coating was no longer present of the back-side and/or the inorganic coating had lost adhesion to the substrate. Conversely, when the corresponding, coated print-face surface was tested with the same tape, tape adhesive was transferred from the test tape to the print face of the sample. Closer analysis revealed that much of the inorganic material that was originally on the back-side surface of the substrate was transferred to the printable surface, due to blocking.

On the substrate layers nearer the outside of the roll, the back-side coating was found generally, to be progressively better adhered to the back-side surface of the substrate. Nearer to the outside of the roll, the back-side surface more effectively pulled adhesive off the Scotch® 600 tape, while the print-face coating did not. These results conformed more closely with the results obtained from testing the roll prior to aging in the warm, humid environment. Though this is encouraging, the whole roll must be acceptable for the film to be fit for use. Such variability would be undesirable in a commercial product. One conclusion that may be drawn from these data is that blocking may have been promoted through increased pressure near the core, which may act to a varying degree, depending upon the location of a substrate or sample, within a roll.

Following additional testing, the aged, clear sample also demonstrated that the haze increased dramatically closer to the core. Haze values were <3% on the outer wraps of the roll, but the haze values exceeded 10% near the core, which is unacceptable, for many applications. Thereby, in addition to the illustrated blocking and coating-bond failures, these results also demonstrate that haze problems can also arise when such two-side coated embodiments are stored in roll form.

In summation, this comparative example demonstrates that under the above stated warm and dry conditions, an inorganic adhesive-receiving coating may block severely with the print face coating and undesirably transfer from the back-side adhesive-receiving surface of the polymer substrate to the surface of the print-face coating. Time, temperature, and/or pressure within the roll may cause some or all of the inorganic coating to block with the print face and even de-bond or release from the back-side surface, which may explain the low release force observed in the clear, non-cavitated roll. The dried and cured back-side coating may be somewhat brittle or friable, which may facilitate de-bonding under pressure and transfer to the print-side, with a low blocking force. Perhaps due to the compressibility of the cavitated substrate, internal roll pressures may not be as high; therefore, less coating fracturing may occur, resulting in maintaining better substrate bonding and yielding a higher blocking force, yet with some degree of transfer still occurring. Transfer of the back-side coating to the print-side will result in an uncoated adhesive-receiving surface, which is known to give poor performance with removable adhesives. Therefore, two-side, mineral-based coating art, such as taught by McGee et al. in U.S. Patent No. 6,939,602 may not produce an acceptable, non-blocking, clarity-retaining film. Warm environments may further aggravate the problems.

### Example 2

Rohm and Haas (R&H), a polymer and chemical company that also manufactures a number of adhesives, including removable adhesives, has lab facilities located in Spring House, Pennsylvania. R&H's lab can provide analysis and act as an independent lab to assess the performance of any of a variety of different substrates in connection with any of R&H's adhesive products, including the performance of coated polymer film substrates used with R&H's removable adhesives. They may also provide analysis of an adhesive and polymer film substrate used in conjunction with any of a variety of base substrates, such as aluminum, stainless steel, thermoplastics, fabric, paper, etc. The removable adhesive compositions are commercially available. The R&H testing service center was utilized for this Example 2.

The following discussion demonstrates one method for how to determine a suitable amount of cross-link agent (using ammonium zirconium carbonate cross link-agent and ethylene acrylic acid ionomer): A preferred ethylene acrylic acid (EAA) ionomer may include approximately 20 wt% acrylic acid and 80 wt% ethylene. This roughly corresponds to the following structure, which has an acid equivalent weight of about 324: [(CH₂CH₂)₉CH₂CHCO₂H]ₓ

Ammonium zirconium carbonate is presumed to have a dimer as the minimum cross-linking unit. The following structure has a molecular weight of about 438 with an acid equivalent weight of 219:

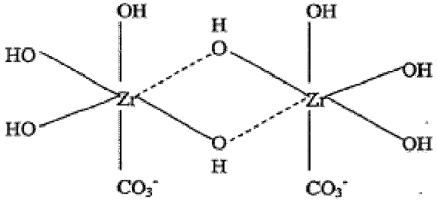

During the cross-linking reaction, carboxylate moieties of the ionomer may displace the carbonate groups (CO₃⁻) that are bound to the zirconium ion in the above structure. (Due to steric limitations, it is likely that the actual degree of cross-linking is lower than the calculated value.) Using these assumptions, if the EAA/ AZC ratio is 7.5, then the degree of cross-linking is about 20%, which is in the middle of a preferred range. If the EAA/AZC ratio is about 5, then the degree of cross-linking is about 30% and if the EAA/AZC ratio is about 30, then the degree of cross-linking is about 5%.

This Example 2 is according to the present invention and demonstrates how the ratio of ionomer, such as ethylene acrylic acid (EAA), to cross-linker, such as ammonium zirconium carbonate (AZC), may affect anchorage of a removable pressure sensitive adhesive (PSA), such as Robond® PS-8120HV (available from R&H) to the adhesive-receiving coating. Adhesive-receiving coatings according to this invention having the following dry compositions were applied at 0.3 to 0.4 g/m² to an in-line treated, back-side surface of 196 LL B2 (a clear, uncoated polymer film) manufactured by ExxonMobil Films, using the procedure described above in the In-Roll Blocking Test.

**Table 1**

| **Formulations for the Adhesive-receiving Surface** | | | | | | |
|---|---|---|---|---|---|---|
| **Sample** | **Genapol UD 050 (Surfactant) %** | **Epostar MA1002 (PMMA) %** | **Epostar MA1006 (PMMA) %** | **Azeote 5800M (X-L) %** | **Michem®Prime 4983 (EAA ionomer) %** | **Ludox® AS40 (Silica) %** |
| A | 0 | 0 | 0 | 0 | 0 | 0 |
| B | NA | NA | NA | NA | NA | NA |
| C | 1.0% | 0 | 0 | 0 | 0 | 99.0% |
| D | 1.6% | 0.2% | 0.2% | 6.1% | 30.6% | 61.1% |
| E | 0.8% | 0.3% | 0.3% | 3.2% | 31.8% | 63.6% |
| F | 0.4% | 0.2% | 0.2% | 2.4% | 48.4% | 48.4% |
| G | 0.8% | 0.2% | 0.2% | 3.2% | 63.6% | 31.8% |
| H | 0.9% | 0.2% | 0.2% | 6.2% | 61.6% | 30.8% |

| | **Genapol UD 050** | **Epostar MA1002** | **Epostar MA1006** | **Azeote 5800M** | **Michem®Prime 4983** | **13Q51A A* (acrylic)** |
|---|---|---|---|---|---|---|
| J | 0 | 0.2% | 0.2% | 23% | 69.0% | 7.7% |

Sample A is comparative (not according to the invention) and is corona treated on the back-side surface but is not coated on either surface. Sample B is also comparative and is Label-Lyte® 50 LL534 II, a clear, two-side- coated PSA facestock film made by ExxonMobil Films and having an acrylic- based print-face coating and an acrylic-based back-side coating. Sample B is comparative and is two-side coated with an acrylic-based coating formulation, with less than 1% mineral content, if any at all. Sample C is also comparative, in that it has silica, but no ionomer or cross-linker, similar to the coating used in Example 1. Samples F, G, and H are according to the claimed invention.

Sample J is also comparative, in that is does not have any mineral additive and instead, includes an ammonia-soluble acrylic polymer as a particulate additive. (The acrylic is also not a carbonyl-free ionomer. Ionomers that are preferred according to the invention are the ionomers that are carbonyl-free. The acrylic esters of sample J are carbonyl functional.) Sample J confirms that a coating composition without the mineral component or using an unacceptable ionomer renders an unsuitable coating composition. The 13Q51AA is an ammonia-soluble acrylic polymer manufactured by Valspar Corporation, Minneapolis, MN that was added instead of a colloidal mineral to observe the performance of such polymer component as a substitute for the colloidal mineral of the other compositions. Azcote is ammonium zirconium carbonate, a carboxyl-reactive cross-linking agent and was added to the compositions containing the ethylene-acrylic acid (EAA) because coatings comprising primarily EAA, such as described by Touhsaent in U.S. Patent No. 5,419,960, sometimes may not bond very well to pressure-sensitive adhesives, even under dry conditions. Such coatings may, however, exhibit good block resistance to many printable surfaces. After conditioning, the following peel forces (reported in ounces/inch) were observed. The table also records the EAA/AZC ratio used in the adhesive-receiving coating.

**Table 2**

| **Evaluation of Interactions between a Removable Pressure-Sensitive Adhesive (Robond® PS-8120HV at 18.5 g/m²) and Adhesive-Receiving Surfaces** | | | | |
|---|---|---|---|---|
| **Sample** | **20-Min Peel (oz./in.)** | **24-Hr Peel (oz./in.) (ambient)** | **24-Hr Peel (oz./in.) (38°C/95%RH)** | **EAA/ AZC** |
| A | 8 | 10 | ≤1 | NA |
| B | 7 | 10 | 2 | NA |
| C | 9 | 14 | 2 | NA |
| D | 9 | 12 | ≤1 | 5.0 |
| E | 8 | 10 | 2 | 9.9 |
| F | 9 | 10 | ≤1 | 20.2 |
| G | 8 | 10 | 2 | 19.9 |
| H | 8 | 10 | 3 | 9.9 |
| J | 8 | 10 | ≤1 | 3.0 |

The adhesive was applied at about 18.5 g/m². The first two columns (20-Min Peel and 24-Hr Peel (ambient)) demonstrate relatively minor differences. From the peel values measured after 24 hours in an ambient environment, backside coatings C and D showed higher peel values than the other samples. This is not necessarily desirable, for it sometimes may be an early indication that the adhesive is getting 'leggy,' caused by a weakening of the bond between the adhesive and the back-side coating. The measured peel force may increase in such cases, due to the physical dynamics of the peel test, wherein the adhesive stretches rather than peels. Accordingly, in addition to the data in the table, it was noted by the testing service that Sample C demonstrated some adhesive legging, suggesting that an inorganic back-side coating without ionomer interacts unfavorably with removable adhesive s.

The third column, demonstrating peel data under warm and humid conditions for 24 hours, exhibits the test results that demonstrate whether a particular formulation may perform acceptably. Samples A, D, F, and J are unacceptable because the adhesive bonds are too low.

As comparative sample B has some previously identified commercial suitability, it may be considered a standard to reference improvement with respect to block-resistance and coating-adhesive-substrate bonding. This suggests that about 56.7 g/25.4mm (2 oz./in.) may be considered a lower limit on retained removable-adhesive peel strength (at the adhesive thickness used in this test). (Sample B, 50 LL534 II, may perform satisfactorily with respect to anchoring removable adhesives in commercial use, but lacks pasteurization resistance and may not provide acceptable block resistance to top-side coatings that have acceptable printability. Also, sample B, which did not contain EAA or AZC cross-linker ("XLR"), demonstrated an unacceptably high haze value (>10%) toward the core of the sample roll, due to the coating composition, and is thus visually unacceptable. Sample B suggests that a desirable result after conditioning in the warm, moist environment is ≥ 56.7 g/25.4mm (2 ounces/inch) with the adhesive thickness used in this test. Further, it should be noted that even though Sample C may appear acceptable, it was taken from a thin slab near the outside of a roll. Other samples of C taken nearer the roll core did not perform as well, similar to the results of Example 1.

Samples E, G, and H seem to demonstrate potentially acceptable results. The results of F and G suggest that a suitable upper limit for the ionomer to cross-linker ("EAA/XLR" or "EAA/AZC") ratio should be about 20. Samples D and J suggest that a suitable lower limit for the EAA/XLR ratio should be about 5. Thus, it is reasonable to conclude based upon these data and components that a suitable operating window for the ionomer to cross-linker ratio may be within a range of from about 5 to about 20. Though compositions C through J in the above table comprised a broad range of EAA/silica ratios, both samples having an EAA/AZC ratio of 9.9 had acceptable performance that was as good as or better than Sample B. Additional experimental work suggests that EAA/AZC ratios of from about 7.5 to about 10 for coatings according to this invention of may be preferred for many applications. Ratios above 20 tend to demonstrate decreased pasteurization resistance (a property not addressed in this example, but significant with respect to overall product performance). Samples showing < 28.4 g/25.4mm (< 1 ounce/inch) peel also demonstrated undesirable legging of the pressure-sensitive adhesive. Most significant, however, is that Sample J, without the colloidal mineral, demonstrated some adhesive transfer from the back-side coating to the test surface used by Rohm & Haas. That is, under warm and moist conditions, the removable adhesive released from the back-side coating. This could undesirably result in adhesive being left on the product (such as an article of clothing) once the temporary label is removed.

### Example 3

This example illustrates how selected samples from Example 2 further performed in the In-Roll Blocking Test. All samples had the same print-face coating as described in Example 1. The results illustrate some embodiments of preferred EAA/silica ratios that may yield good blocking resistance. Samples were coated and, after rewinding, were placed the same day in a hot and dry environment (52°C, -10% RH) for about 16 hours. After conditioning, the samples were rewound on the Talboys coater. If the sample tore before being completely rewound, the number of wraps on the three-inch film receiving core was determined at the point of tearing. Higher numbers indicate improved, though still unacceptable results for many applications. Samples that rewound completely are designated as 'Acceptable' in the 'Rewind' column.

**Table 3**

| **In-Roll Blocking Test, blocking results and EAA/silica ratio** | | |
|---|---|---|
| **Sample** | **Rewind (Wraps at Tear)** | **EAA/Silica** |
| A | Tear (0) | NA |
| D | Tear (20) | 0.5 |
| E | Tear (16) | 0.5 |
| F | Tear (21) | 1.0 |
| G | Tear (62) | 2.0 |
| H | Acceptable | 2.0 |
| J | Acceptable | 9.0 |

Sample J contains an ammonia-soluble acrylic instead of colloidal silica, so the given value is the ratio of EAA/acrylic. Adhesives and print face coatings tend to bond well to minerals, such as silica. Increasing the mineral content also tends to increase the likelihood for blocking. Conversely, adhesives and print face coatings do not usually bond well to ionomers, such as EAA. Samples D and E have similar EAA/silica ratios and tore at about the same place on the roll. Even Sample F, having about equal parts silica and EAA, tore at about the same place on the roll as Samples D and E. However, if the weight ratio of EAA or ionomer concentration was increased to about twice that of the silica or colloidal mineral component, then blocking began to decrease, as demonstrated by Samples G and H. The primary difference between Samples G and H was the amount of cross linker, wherein Sample H had more cross linker and demonstrated further reduced blocking. Recall that Table 2 also demonstrates that Sample H had improved 24-hour conditioned peel strength and adhesive bonding as compared to Sample G. While Sample J, which is mostly EAA, had good block resistance, it offered poor anchorage for the removable adhesive in Table 2 when placed in a tropical environment.

Sample A in Table 3 also demonstrates that a treated, but uncoated, adhesive-receiving surface blocks very strongly to the most preferred print-face coating. Adding adhesive-receiving coatings to the back-side that contain all the elements of the invention improve block resistance. The best blocking resistance was observed when the EAA/Silica ratio was greater than about 1 and even more preferably greater than about 2. Of the samples prepared in this set, Sample H had acceptable blocking resistance and Table 2 illustrates that the Sample H adhesive-receiving coating also demonstrates acceptable performance with a removable adhesive.

### Reference Example 4

This example discusses results of the Pasteurization Evaluation Test and In-Roll Blocking Test to illustrate the need for an insolubilizer in embodiments comprising a water-sensitive colloidal mineral (e.g., Laponite® JS). This example also demonstrates some preferred ratios for the insolubilizer (I) and water-sensitive colloidal mineral. Structures were prepared as in Example 1, with the same print face that was used in that example. The back-side, adhesive-receiving coating formulations contain two different insolubilizer materials: NeoCryl® XK-90 and NeoCryl® XK-176. The insolubilizers may, according to this invention, render the otherwise water-sensitive colloidal mineral insensitive or resistive to attack or degradation by water.

Ludox® AS40 was added in some sample formulations in this Example, in place of an insolubilizer, to provide some water resistance to the mineral component of the formulation. Ludox® AS40 is a colloidal mineral that may be insensitive or resistant to water when dried, without another insolubilizer present. Although the Ludox is water resistive, it lacks the amine or hydrazine functionality necessary to render the more water-sensitive mineral components, such as Laponite® JS, insensitive or resistive to water, when both are present together. Ludox® AS40 was included in the formulation so that an insolubilizer to Laponite ("I/Lap") ratio of about zero could be prepared without drastically altering the relative percentages of the other components. It was desired for this exercise to select a component that would not, by its nature, contribute to a degradation of water resistance. However, frequently preferred insolubilizing agents include those agents that comprise aqueous anionic polymer dispersions containing carbonyl-reactive amine and/or hydrazine functional groups, such as the NeoCryl® emulsions.

**Table 4**

| **Coating Formulations for the Adhesive-receiving Surface with Varying Types of Insolubilizers ("I")** | | | | | | | |
|---|---|---|---|---|---|---|---|
| **Sample** | **Epostar MA1002 %** | **Epostar MA1006 %** | **Azeote 5800M %** | **Michem®Prime 4983 (EAA) %** | **I-Type %** | **Laponite JS %** | **I/Lap Ratio** |
| | | | | | **Ludox AS40** | | |
| K | 0.1 | 0.1 | 6.9 | 51.6 | 31.0 | 10.3 | 0 |
| L | 0.1 | 0.1 | 5.7 | 42.8 | 34.2 | 17.1 | 0 |
| M | 0.1 | 0.1 | 4.9 | 36.5 | 36.5 | 21.9 | 0 |

| | | | | | **NeoCryl XK-90** | | |
|---|---|---|---|---|---|---|---|
| N | 0.1 | 0.1 | 6.2 | 46.8 | 28.1 | 18.7 | 1.5 |
| P | 0.1 | 0.1 | 5.2 | 39.4 | 31.5 | 23.6 | 1.3 |
| Q | 0.1 | 0.1 | 5.7 | 42.8 | 42.8 | 8.6 | 5.0 |

| | | | | | **NeoCryl XK-176** | | |
|---|---|---|---|---|---|---|---|
| R | 0.1 | 0.1 | 5.7 | 42.8 | 25.7 | 25.7 | 1.0 |
| S | 0.1 | 0.1 | 6.2 | 46.8 | 37.4 | 9.4 | 4.0 |
| T | 0.1 | 0.1 | 5.2 | 39.4 | 39.4 | 15.8 | 2.5 |

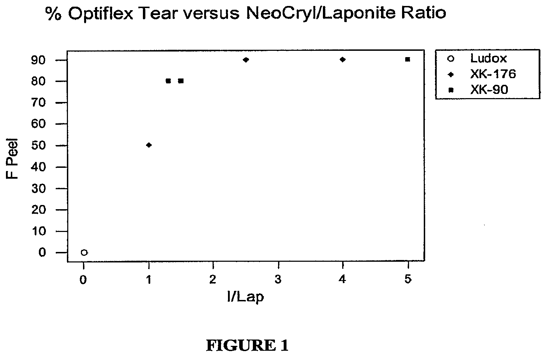

The plot in Figure 1 illustrates how adhesive anchorage in the hot water, Pasteurization Evaluation, varies as a function of the ratio ("I/Lap") of insolubilizer ("I") to water-sensitive mineral content (Laponite JS). On the y-axis, the "F-Peel" represents the percentage tear for the OptiFLEX when attempting to peel the adhered film from a test surface, with a manual "fast-peel" of the film from the test surface as described in the Pasteurization Evaluation Test.

Figure 1 illustrates that increasing the percentage of NeoCryl® increases the adhesive anchorage to the film coating. The y-axis represents the degree of tearing and/or adhesive removal that occurs when the OptiFLEX® film, which initially had all the adhesive, is quickly peeled away from the test substrate after conditioning in a hot-water bath. The OptiFLEX® has a commercially viable adhesive-receiving surface to which a pasteurization-resistant adhesive is applied. This test evaluates experimental adhesive-receiving layers in a tug-of-war with the commercial sample. Conceptually, an F-Peel percentage of less than 50% means that the bond is not as good as the OptiFLEX® bond, while greater than 50% means that the bond is stronger than the OptiFLEX® bond after hot-water immersion. Thus, from strictly an adhesive anchorage point of view, everything to the right of about 1 on the X-axis, would be preferable. Figure 1 illustrates that the adhesive anchorage in hot water starts to degrade when the "I/Lap" (insolubilizer to Laponite) weight ratio drops below about 2.5, with a sharper decline seen between about 1.5 and 1.0. If there is no insolubilizer, then the adhesive anchorage is not strong enough to cause any tearing of or adhesive removal from the OptiFLEX® facestock. Therefore, these results demonstrate a probable need for an insolubilizer when the adhesive-receiving formulation contains a water-sensitive colloidal mineral such as Laponite® JS.

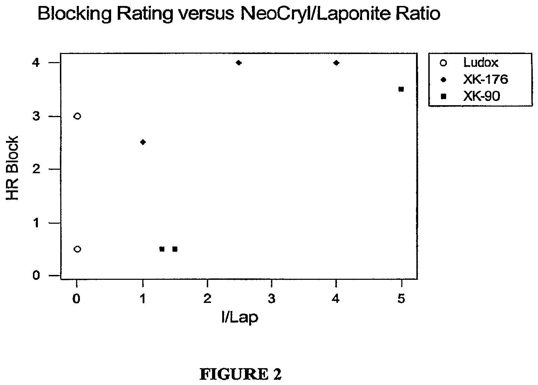

Also, while adhesive anchorage is important, the adhesive-receiving coating surface must not unacceptably block to the print-face coating. Figure 2, below, illustrates that from a blocking point of view, increasing insolubilizer concentration causes blocking to increase. Thus, for a particular insolubilizer and mineral combination, there exists an optimal operating window that produces the best or a preferred range or combination of adhesiveness, while minimizing blocking effects within an allowable limit. Figure 2 illustrates results for the in-roll blocking test ratings after removal from the hot room (HR), as a function of the "I/Lap" ratio. "HR Block" on the y-axis, stands for hot-room blocking, indicating a determination made after conditioning the samples in hot and dry, conditions for overnight. To clarify the Y-axis values of Figure 2, if two samples are tested and one receives a "1" rating and the other sample receives a "0", the ratings are averaged to yield "0.5". From experience, a "0.5" rating exhibits very little blocking, but may not be good enough to get a "0", while still performing better than other samples that received a "1".

As per the blocking rating scale of 0 through 5 discussed in the In-Roll Blocking Test procedure description above (based upon noise, unwind force, tearing, etc.), anything less than or equal to a rating of 3 generally may be considered acceptable. Lower is better, from purely a blocking standpoint. Unlike the smooth curve seen with adhesive anchorage, the plot for Figure 2 demonstrates that the most favorable (least) blocking results when the "I/Lap" weight ratio (the weight ratio of insolubilizer to colloidal mineral) is between about 1.3 and 1.5. At a ratio of 1.0, the blocking was a little more severe, but still in the acceptable range. Similarly, a ratio of up to about 2.0 or even 3.0 may also be acceptable. Increased insolubilizer concentrations tend to increase blocking, including blocking to a coated print-face.

To ensure that the film, the coating, and the adhesive will maintain a robust and secure bond to each other, Figures 1 and 2 should be considered together. It may be desirable for adhesive robustness, that the I/Lap ratio be greater than or equal to about 1, while for blocking mitigation, it may be desirable that the I/Lap ratio be less than about 2 or 3, depending upon which insolubilizer is used. Thus, an optimal operating window may be with and I/Lap ratio of from about 1 to about 2 or 3, depending upon component selection. Surprisingly, I/Lap ratios within the acceptable window also demonstrated good clarity. Though formulations from this example containing water-resistive colloidal silica, e.g., the Ludox AS-40, instead of a true insolubilizer yielded acceptable-to-good blocking results, Figure 1 demonstrates that adhesive anchorage was less favorable and perhaps even unacceptable, in a wet environment without the more preferred insolubilizers that include aqueous anionic polymer dispersions containing carbonyl-reactive amine and/or hydrazine functional groups.

The optimum balance between the relative weights of insolubilizer and water-sensitive colloidal mineral will be governed by the mole fraction of amine or hydrazine functionality present in the insolubilizer and the relative concentration of ionizable groups in the colloidal mineral. For water-sensitive colloidal minerals and insolubilizers that are similar to those described in this Example, the most preferred ratio of insolubilizer to water-sensitive colloidal mineral may fall in the range between 0.75 and 2.0, or between 0.75 and 3, depending upon which insolubilizer is used.

### Reference Example 5

As discussed in the prior art, it is known to control blocking by providing at least one side of a film with a relatively rough surface (typically Rₐ ≥ 500nm (0.5 microns)). This Example 5 demonstrates that the back-side coating formulations and film structures can control blocking with a relatively smooth surface. Rₐ was measured for the back-side, adhesive-receiving coatings described in Example 4, with an M2 Perthometer from Mahr Corporation, equipped with a 150 stylus. The results reported in Table 5 are the average of five measurements on each sample and exhibit an average roughness Rₐ of less than 500nm (0.5). The data further demonstrate that the roughness value, regardless of value, is not a controlling factor with respect to controlling blocking.

**Table 5**

| **Surface Roughness (Rₐ) of Adhesive-receiving Surfaces** | |
|---|---|
| **Sample** | **Rₐ (microns)** |
| K | 0.11±0.03 |
| L | 0.12±0.03 |
| M | 0.13±0.03 |
| N | 0.12±0.03 |
| P | 0.14±0.05 |
| Q | 0.12±0.02 |
| R | 0.13±0.04 |
| S | 0.15±0.02 |
| T | 0.14±0.04 |

The results in Table 5 suggest that even with relatively constant roughness, blocking results (see Figure 2) varied widely from good to unacceptable. Therefore, block resistance and roughness are not necessarily directly correlated and predictable. This example, however, does not exclude the possibility of using particulates in the adhesive-receiving coating of this invention to increase roughness, if desired.

### Example 6

This example demonstrates that adhesive-receiving coatings according to this invention do not block strongly to the printable surface of certain commercially available films, such as Rayoface® CPA (Innovia), Clear PSA4 (ExxonMobil Films), and 50 LL534 II (ExxonMobil Films), at 52°C or even 60°C, using the One-Hour Blocking Test. The commercially produced, adhesive-receiving surface from 50 LTG702 (ExxonMobil Films) was also included in the study, as well as some additional experimental, adhesive-receiving coating formulations as described in Table 6.

**Table 6**

| **Adhesive-Receiving Coatings applied on a Larger Coater** | | | | | | | | |
|---|---|---|---|---|---|---|---|---|
| **Sample** | **Primer** | **Azeote 5800M AZC, %** | **EAA %** | **Ludox AS40 %** | **Laponite JS %** | **NeoCryl XK-90 "I" %** | **EAA/AZC** | **I/Lap** |
| U | None | 5.7 | 42.8 | --- | 21.4 | 29.9 | 7.5 | 1.4 |

| | | | | | **Resinall 807 %** | **CaCO₃ %** | | |
|---|---|---|---|---|---|---|---|---|
| V | 8-3 | 6.9 | 52.1 | 39.1 | --- | 1.6 | 7.6 | --- |
| W | None | 6.9 | 52.1 | 39.1 | --- | 1.6 | 7.6 | --- |
| X | None | 6.8 | 50.8 | 38.1 | 2.5 | 1.5 | 7.5 | --- |
| Y | 8-1 | 6.9 | 52.1 | 39.1 | --- | 1.6 | 7.6 | --- |
| Z | 8-2 | 6.9 | 52.1 | 39.1 | --- | 1.6 | 7.6 | --- |

Samples V, W, X, Y and Z are according to the claimed invention.

The primer numbers reference various primer formulations described in detail below, in Example 8. Resinall 807 is a rosin ester that is known to improve ink adhesion on acrylic coatings for use in humid or wet environments. It was added to Sample X in Table 6 to observe whether it may improve adhesion of the coating formulation and/or adhesion of the adhesive, in a humid or wet environment. In addition to the ingredients shown above, the adhesive-receiving coatings of Table 6 also contained about 0.1 wt% each of Tospearl® 120 and Epostar® MA 1006. The wet coatings also contained 0.1 wt% Genapol UD050. Multifex-MM (70-nm precipitated calcium carbonate, colloidal mineral) from Specialty Minerals was also employed in the samples containing calcium carbonate. Resinall® 807 was dissolved in aqueous ammonia before adding to the coating formulations.

The above formulations were applied to the adhesive-receiving surface of 196 LL B2 (ExxonMobil Films) with in-line treatment, using a reverse-direct gravure application method, at line speeds of up to 53 m/min (175 feet per minute). Adhesive-receiving coatings were dried at 93°C and, if used, the primer was dried at 82°C. The adhesive-receiving coatings were applied at about 7.5% solids with a 95-Quad gravure cylinder. The primer was applied with an offset roll. The dried weight of the primer, when used, was 0.1 g/m². The dried weight of the adhesive-receiving coatings was between 0.42 and 0.52 g/m².

Table 7 identifies the source of the back-side, adhesive-receiving surface or coating ("Back"), the source of the front-side, printable surface ("PF"), the temperature at which the blocking test was conducted (°C), the average blocking value (Block) in g/25.4mm (g/inch), and the P-V value in g/25.4mm (g/inch). When blocked to its own uncoated adhesive-receiving surface, Rayoface® CPA yields acceptable blocking performance in the field. It represents a reasonable target reference for qualifying blocking resistance, even though Rayoface® CPA is only coated on the print-face. An improvement product is desired, over the current 50 LL534 II two- side-coated, clear label facestock that tends to block strongly between its print- face and its adhesive receiving surface. Clear PSA4 from ExxonMobil does not block to its uncoated and untreated back-side, which must be treated before application of an adhesive. The samples in Table 7 that have the commercial product name designations in both the Back column and the PF column are provided for comparative purposes only. Most of the comparative product samples have blocking values that are unacceptable at the temperatures cited, with the only exceptions being the combinations involving 50 LTG702, which may be moderately acceptable from a blocking standpoint, but still has other limitations. The samples with single letter designations in the Back column are samples prepared as discussed previously herein, having various corresponding back-side coating formulations provided on the otherwise commercial films designated in the PF column.

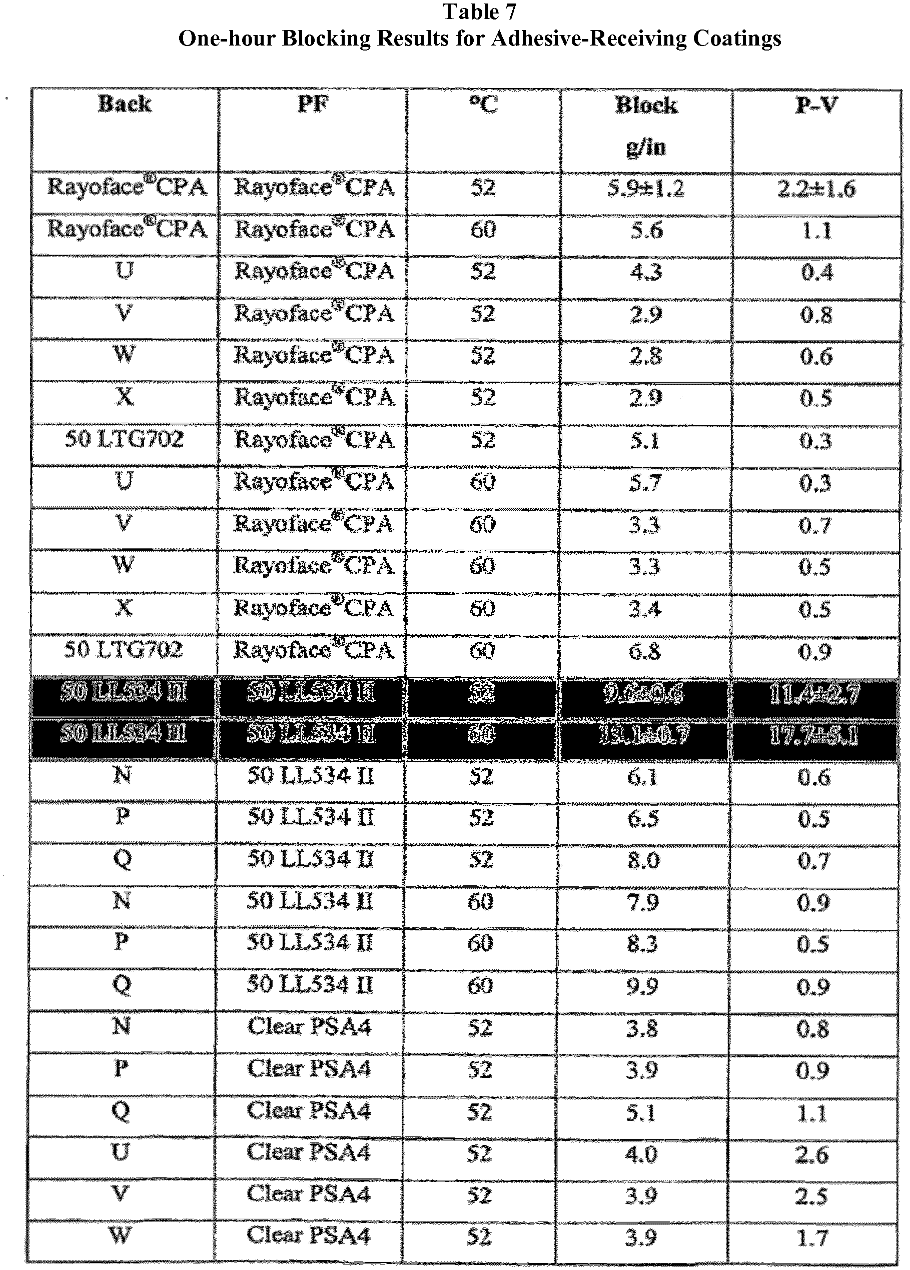

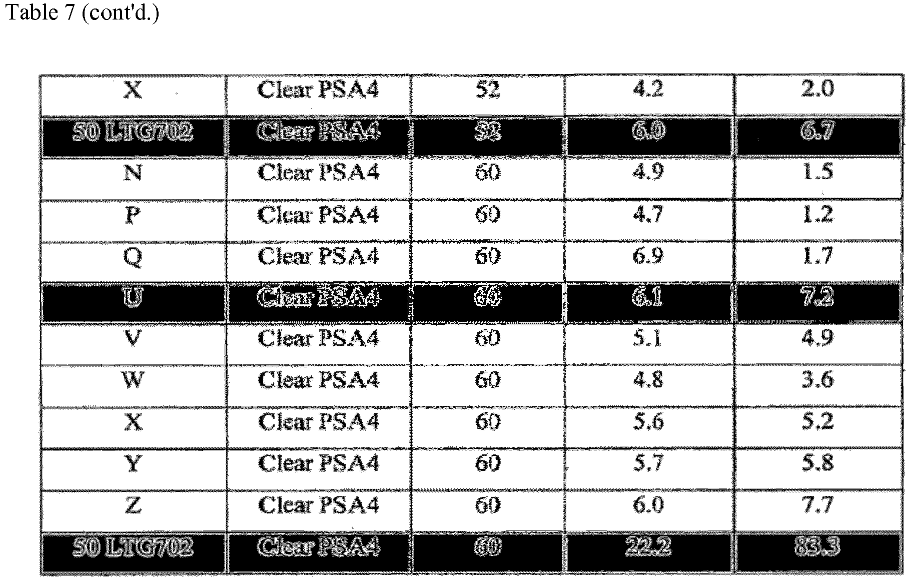

It is preferable that the P-V value is less than the average blocking value. With only a couple of exceptions, all the shaded rows have adhesive-receiving coatings that are on commercially available label films and have a P-V value that is greater than the average blocking value. Though the adhesive- receiving coating on 50 LTG702 gave acceptable blocking performance with Rayoface® CPA, another example will show that this coating becomes hazy during pasteurization. Also, Rayoface® CPA typically has an inferior print surface when compared to Clear PSA4, as the CPA requires the print surface to be treated prior to application of the ink in order to get satisfactory ink adhesion, which also increases blocking tendencies.

Formulation "U" demonstrated acceptable blocking results at 52°C for all the tested print faces, but not at 60°C with clear PSA4. While this formulation may not be the strongest candidate in all applications, it may be functional for some printable surfaces or even with the print face of Clear PSA4, provided that the rolls were kept cool, as is the current practice for some existing commercially available films. It should also be noted that if the back-side coating of 50 LL534 II were blocked to the print face of Clear PS A4 at 52°C or 60°C, the two surfaces may weld together and may not be separated without destroying the film. Clear PSA4 samples that were tested against adhesive-receiving coatings N, P, and Q had been exposed to hot-room conditions (52°C) for 24 hours prior to the blocking test. All other Clear PSA4 samples were blocked to test surfaces within two weeks of coating and kept at ambient temperatures (<30°C). Table 7 illustrates that the mean peel force (Block) for the ambient-aged samples does not change much from the hot-room aged samples, but the P-V value does increase considerably.

### Example 7

This example demonstrates that two-side coated film structures made according to the present invention can maintain good clarity after exposure to boiling water and/or high pressure 52 kg/cm² (750 psi)). Samples for the high-pressure haze measurements were taken from samples tested after being peeled in the One-hour Blocking Test (60°C).

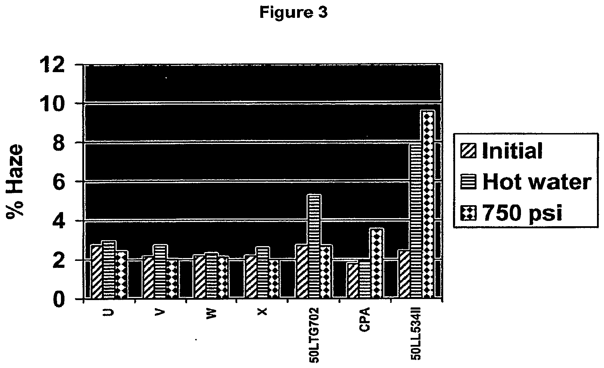

Figure 3 supports the conclusion that structures made according to this invention (namely structures made with back-side coating formulations V, W, and X from Table 6 above, coated on the adhesive-receiving surface and the print-face coating from Example 1 on the opposite surface) all demonstrate <3% haze initially, after immersion in boiling water for ten minutes, and after being in a press at about 52 kg/cm² (50 psi) and 60°C for one hour. The adhesive-receiving surface of comparative 50 LTG702 (which had the same print-face coating as Example 1) did not have acceptable haze after exposure to boiling water. Comparative Rayoface® CPA did withstand exposure to hot water, but the one-side coated structure also exhibited >3% haze after being exposed to high pressure at 60°C. Hot water and high pressure both severely degraded the appearance of comparative 50 LL534 II.

### Example 8

This example demonstrates the benefit of using the back-side coatings of this invention on the adhesive-receiving back-side surface, along with a cationic primer to prevent hot-melt induced curl. Primers, such as those disclosed by Steiner, et al. (U.S. Patent No. 4,214,039) and cationic polymers, such as those described by McGee (U.S. Patent No. 6,596, 379), when used as primers, may be especially effective in preventing curl induced by hot-melt adhesives. In contrast, an amino-functional polymer that is anionically stabilized, such as NeoCryl XK-90, was found ineffective as a primer, to inhibit curl induced by hot-melt adhesives. A detailed description of various primers and the method of application is provided below. Preferred primers, as described below, may effectively inhibit curl, while not adversely affecting surface interaction or bonding between adhesives and the adhesive-receiving surface. The primers are also resistant to degradation due to pasteurization.

### Primer Composition 8-1

This cationic primer is prepared by mixing the following ingredients:

| | |
|---|---|
| Tap water (for 10% solids) | 12806 g |
| Genapol UD 050 (for 0.15% overall) | (Clariant Corp.) 27 g |
| Hexyl Cellosolve (for 0.25% overall) | (Union Carbide) 45 g |
| 10% Imicure EMI-24, pH 7.5 (2 phr) | (Air Products) 353 g |
| R1117 XL, (37%, 100 phr) | (W.R. Grace) 4769 g |

The 10% solution of Imicure EMI-24 is prepared by mixing 190 g Imicure EMI-24 (Air Products) with 1626 g water. After the imidazole was completely dissolved in the water, 84 grams of glacial acetic acid is added to the mixture. The resulting pH is typically close to 7.5. The primer may be applied preferably at speeds of between 125 and 175 fpm using an offset roll, coming off a flooded nip, between the smooth rubber roll and a 200-Quad gravure cylinder. The temperature of the primer oven is typically set at about 82°C. The coating weight when applied in this manner is about 0.15 g/m². This primer may be used under the coating on the adhesive-receiving surface and/or beneath a print-face coating, such as the print-face coating described in Example 1. The print-face coating may be applied using a reverse-direct gravure kiss coater equipped with a 95 -Quad gravure cylinder.

### Primer Composition 8-2

This cationic primer is prepared by mixing the following ingredients, according to Steiner et al. (U.S. Patent 4,214,039):

| | |
|---|---|
| Polyment® NK7000 (50%, 100 phr, Nippon Shokubai) | 926 g |
| Water (for 22% solids) | 1581 g |
| 10% Epomin® P-1050 adjusted to pH 6.8 with glacial acetic acid (4.5 phr) | 208 g |
| Hexyl Cellosolve (Union Carbide) | 87 g |
| Daubond® 42X6311 (53%, 49 phr, Daubert Chemical Co., Inc.) | 428 g |

After stirring the above mixture for 24 hours, coating solids may be cut to about 10% with water and the final concentration of Hexyl Cellosolve® adjusted to about 0.5%. This primer may then be applied in the same fashion as primer 8-1. Typically the coating weight of this primer may be between 0.15 and 0.25 g/m².

### Primer Composition 8-3

This anionically stabilized primer has the following composition. The target coating weight for this primer may be about 0.1 g/m² and also may be applied in the same fashion as primer 8-1:

| | |
|---|---|
| Tap water (for 10% solids) | 11644 g |
| NeoCryl XK-90 (45% solids, 100 phr) (DSM NeoResins) | 3333 g |
| Hexyl Cellosolve (0.15%)(Union Carbide) | 23 g |

Table 8 exhibits the amount of curl that was induced in different sample structures after one week of ambient conditioning in the Hot-Melt Curl Test. The first four rows are comparative examples.

**Table 8**

| **Measurement of Hot-Melt Induce Curl** | | | |
|---|---|---|---|
| **Back-side** | **Back-side Primer** | **Print Face** | **Net Curl (mm)** |
| Uncoated | None | Clear PSA4 | +15.3 |
| 50 LL534 II | None | 50 LL534 II | +7.2 |
| 50 LTG702 | 8-3 | See Example 1 | +10.5 |
| 50 LTG702 | None | See Example 1 | +15.5 |
| W | None | See Example 1 | +13.5 |
| Y | 8-1 | See Example 1 | -0.8 |
| Z | 8-2 | See Example 1 | -1.0 |
| V | 8-3 | See Example 1 | +8.5 |

Table 8 illustrates that the only difference among samples V, W, Y, and Z are the primers used on the adhesive-receiving surface. The topcoats on the adhesive-receiving surfaces were all the same. Only samples that were coated and that had cationically stabilized primers yielded acceptable curl results. Coated and uncoated examples of the first four comparative, commercially available film samples all yielded unacceptable levels of curl.

### Example 9

Table 9 illustrates the peel strength for a removable, water-based, pressure-sensitive adhesive (PS-8120 HV, from Rohm & Haas), applied at 21 g/m², which is at a higher adhesive coating weight than in Example 2, which was applied at 18.5 g/m². In this example back-side coatings were applied to the adhesive-receiving surface of 196 LL B2, from ExxonMobil Films, at 0.3 to 0.4 g/m². At the higher adhesive weight of this Example 9, a desirable peel value after 24 hours in tropical conditions is between 170 g and 227 g/25.4mm (6 and 8 ounces/inch).

**Table 9**

| **Back-side Topcoat** | **Back-side Primer** | **24-hr SS Peel Ambient (ounces/inch)** | **24-hr SS Peel 38C/95% RH (ounces/inch)** |
|---|---|---|---|
| 50 LL534 II | None | 8.8 | 5.9 |
| U | None | 9.5 | 8.0 |
| W | None | 9.5 | 6.4 AFB |
| Y | 8-1 | 9.2 | 6.4 |

Sample W has an EAA/AZC ratio of 7.6 in contrast to a ratio of about 9.9 for sample H in Example 2. The "AFB" in the results for Sample W means "adhesive failure back-side." The unprimed adhesive-receiving coating of Sample W lost anchorage to the label facestock, under tropical conditions. However, with a primer beneath the back-side coating (back-side coatings for W and Y are the same), desirable peel values for the removable adhesive may be obtained without the coating losing anchorage to the substrate. Sample Y had about the same peel value as Sample W, but in Sample Y, the peel separation more desirably occurred at the adhesive-test-surface interface, rather than at the coating-substrate interface. In other words, the test predicts that a back-side coating according to this invention, such as sample Y, would be less likely than sample W to leave unwanted adhesive on the labeled article, after removal of a temporary label.

Sample U, which contains a polymeric insolubilizer, demonstrated better anchorage to the substrate under tropical conditions than the other samples, even without the primer. However, Example 8 suggests that a primer may be useful for preventing hot-melt-adhesive induced curl. If, for economic reasons, a primer is not desired or if the film will not be used in an application employing hot-melt adhesives, then the system of Sample U, employing the insolubilizer may be preferred. Alternatively, in accordance with the claimed invention, small amounts of an insolubilizer may be introduced into a coating formulation that is based primarily on a water-resistant colloidal mineral, so long as blocking properties are not compromised.

## Claims

1. A coated polymer film comprising:
a) a polymer substrate including a first side and a second side;
b) a back-side coating on the second side of the substrate, the back-side coating comprising:
1) an ionomer comprising from 50 wt% to 98 wt% of one or more carbonyl-free monomers selected from a group consisting of styrene, methyl styrene isomers, halogenated styrene isomers, vinyl chloride, vinylidene chloride, butadiene, acrylonitrile, methacrylonitrile, ethylene, propylene, and butylene isomers; and from 50 wt% to 2 wt% of one or more of a group consisting of acrylic acid, methacrylic acid, crotonic acid, maleic acid, and itaconic acid; and
2) particles of a water-resistant colloidal mineral, wherein a water-resistant mineral is one that, after it has been applied as a component of a coating composition to a substrate and dried, will not readily reionize in the presence of water, wherein a majority by weight of the particles have a three-dimensional mean diameter of not greater than 0.1 micrometers (0.1 micron), and wherein a majority by weight of the particles have no mean diameter in any dimension of an x-y-z Cartesian coordinate system of less than 0.0005 micrometers (0.0005 micron), wherein a general shape of each of the particles is spherical or cubic, and wherein the particles comprise from 25 wt% to 55 wt% of the back-side coating when dried; and
c) a front-side coating on the first side of the substrate, wherein the front-side coating is printable.

2. The coated polymer film of claim 1, wherein the back-side coating further comprises:
3) a cross-link agent.

3. The coated polymer film of claim 1, wherein the ionomer is a self-crosslinking ionomer.

4. The coated polymer film of claim 1, wherein the ionomer comprises from 30 wt% to 80 wt% of the weight of the back-side coating when the back-side coating is dry.

5. The coated polymer film of claim 1, wherein the water-resistant colloidal mineral comprises a mineral component that is water-resistant when dry.

6. The coated polymer film of claim 5, wherein at least a majority by weight of the mineral component comprises silicone and oxygen.

7. The coated polymer film of claim 2, wherein the cross-link agent comprises a carboxyl-reactive cross-linking agent, wherein the carboxyl-reactive cross-linking agent comprises at least one of coordinating metal compounds, aziridine, isocyanate, epoxy, and silane derivatives, and wherein the cross-link agent cross links from 5 wt.% to 35 wt.% of the acid groups present in the ionomer.

8. The coated polymer film of claim 1, wherein the back-side coating further comprises an insolublizing agent, wherein the insolublizing agent comprises an aqueous anionic polymer dispersion including at least one of a carbonyl-reactive amine and a hydrazine functional group.

9. The coated polymer film of claim 1, wherein the water-resistant colloidal mineral comprises at least one of silica, alumina, titanium dioxide, calcium carbonate, sodium magnesium fluorosilicate, synthetic sodium hectorite, white bentonite, montmorillonite, alkaline polyphosphates, talc, alkaline silicate salts, water glass, surface-treated silica, surface-treated alumina, surface-treated titanium dioxide, surface-treated calcium carbonate, and surface-treated talc.

10. The coated polymer film of claim 1, wherein at least one of the first side and the second side of the polymer substrate is treated with a surface treatment selected from a group consisting of flame treatment, plasma treatment, and corona treatment, wherein the at least one of the first side and the second side of the polymer substrate is treated prior to printing or prior to applying a coating to the first side or the second side of the polymer substrate.

11. The coated polymer film of claim 1, further comprising a primer positioned between the polymer substrate and the back-side coating.

12. The coated polymer film of claim 1, wherein a ratio of wt% ionomer to wt% of the particles of the water-resistant colloidal mineral in the back-side coating when dry is at least 1:1.

13. The coated polymer film of claim 7, wherein a ratio of wt% insolubilizing agent to wt% of the particles of the water- resistant colloidal mineral in the back-side coating when dry is within a range of from 0.25:1 to 2.5:1.

## Patentansprüche

1. Beschichtete Polymerfolie, umfassend:
a) ein Polymersubstrat, beinhaltend eine erste Seite und eine zweite Seite;
b) eine Rückseitenbeschichtung auf der zweiten Seite des Substrats, wobei die Rückseitenbeschichtung umfasst:
1) ein lonomer, umfassend zu 50 Gew.-% bis 98 Gew.-% ein oder mehrere carbonylfreie Monomere, ausgewählt aus einer Gruppe, bestehend aus Styrol, Methylstyrolisomeren, halogenierten Styrolisomeren, Vinylchlorid, Vinylidenchlorid, Butadien, Acrylnitril, Methacrylnitril, Ethylen, Propylen und Butylenisomeren; und zu 50 Gew.-% bis 2 Gew.-% einer oder mehrerer von einer Gruppe, bestehend aus Acrylsäure, Methacrylsäure, Crotonsäure, Maleinsäure und Itaconsäure; und
2) Partikel eines wasserbeständigen kolloidalen Minerals, wobei ein wasserbeständiges Mineral eins ist, dass, nachdem es als ein Bestandteil einer Beschichtungszusammensetzung auf ein Substrat aufgetragen und getrocknet worden ist, in Gegenwart von Wasser nicht ohne Weiteres erneut ionisiert, wobei ein Gewichtshauptteil der Partikel einen mittleren dreidimensionalen Durchmesser von nicht mehr als 0,1 Mikrometer (0,1 Mikron) aufweist und wobei ein Gewichtshauptteil der Partikel in beliebiger Dimension eines x-y-z-Kartesischen Koordinatensystems keinen mittleren Durchmesser von weniger als 0,0005 Mikrometer (0,0005 Mikron) aufweist, wobei eine allgemeine Gestalt von jedem der Partikel sphärisch oder kubisch ist und wobei die Partikel von 25 Gew.-% bis 55 Gew.-% der Rückseitenbeschichtung, wenn getrocknet, umfassen; und
c) eine Vorderseitenbeschichtung auf der ersten Seite des Substrats, wobei die Vorderseitenbeschichtung bedruckbar ist.

2. Beschichtete Polymerfolie nach Anspruch 1, wobei die Rückseitenbeschichtung weiter umfasst:
3) ein Vernetzungsmittel.

3. Beschichtete Polymerfolie nach Anspruch 1, wobei das lonomer ein selbstvernetzendes lonomer ist.

4. Beschichtete Polymerfolie nach Anspruch 1, wobei das lonomer von 30 Gew.-% bis 80 Gew.-% des Gewichts der Rückseitenbeschichtung umfasst, wenn die Rückseitenbeschichtung trocken ist.

5. Beschichtete Polymerfolie nach Anspruch 1, wobei das wasserbeständige kolloidale Mineral einen Mineralbestandteil umfasst, der, wenn trocken, wasserbeständig ist.

6. Beschichtete Polymerfolie nach Anspruch 5, wobei mindestens ein Gewichtshauptteil des Mineralbestandteils Silikon und Sauerstoff umfasst.

7. Beschichtete Polymerfolie nach Anspruch 2, wobei das Vernetzungsmittel ein carboxylreaktives Vernetzungsmittel umfasst, wobei das carboxylreaktive Vernetzungsmittel mindestens eines von koordinierenden Metallverbindungen, Aziridin, Isocyanat, Epoxid und Silanderivaten umfasst, und wobei das Vernetzungsmittel von 5 Gew.-% bis 35 Gew.-% der in dem lonomer vorhandenen Säuregruppen vernetzt.

8. Beschichtete Polymerfolie nach Anspruch 1, wobei die Rückseitenbeschichtung weiter einen Unlöslichmacher umfasst, wobei der Unlöslichmacher eine wässrige anionische Polymerdispersion umfasst, beinhaltend mindestens eines von einem carbonylreaktiven Amin und einer funktionellen Hydrazingruppe.

9. Beschichtete Polymerfolie nach Anspruch 1, wobei das wasserbeständige kolloidale Mineral mindestens eines umfasst von Silica, Alumina, Titandioxid, Calciumcarbonat, Natriummagnesiumfluorsilicat, synthetischem Natriumhectorit, weißem Bentonit, Montmorillonit, alkalischen Polyphosphaten, Talk, alkalischen Silicatsalzen, Wasserglas, oberflächenbehandeltem Silica, oberflächenbehandeltem Alumina, oberflächenbehandeltem Titandioxid, oberflächenbehandeltem Calciumcarbonat und oberflächenbehandeltem Talk.

10. Beschichtete Polymerfolie nach Anspruch 1, wobei mindestens eine von der ersten Seite und der zweiten Seite des Polymersubstrats mit einer Oberflächenbehandlung behandelt wird, ausgewählt aus einer Gruppe, bestehend aus einer Flammenbehandlung, Plasmabehandlung und Koronabehandlung, wobei die mindestens eine von der ersten Seite und der zweite Seite des Polymersubstrats vor dem Drucken oder vor dem Auftragen einer Beschichtung auf die erste Seite oder die zweite Seite des Polymersubstrats behandelt wird.

11. Beschichtete Polymerfolie nach Anspruch 1, weiter umfassend eine zwischen dem Polymersubstrat und der Rückseitenbeschichtung positionierte Grundierung.

12. Beschichtete Polymerfolie nach Anspruch 1, wobei ein Verhältnis von Gew.-% des lonomers zu Gew.-% der Partikel des wasserbeständigen kolloidalen Minerals in der Rückseitenbeschichtung, wenn trocken, mindestens 1:1 beträgt.

13. Beschichtete Polymerfolie nach Anspruch 7, wobei ein Verhältnis von Gew.-% Unlöslichmacher zu Gew.-% der Partikel des wasserbeständigen kolloidalen Minerals in der Rückseitenbeschichtung, wenn trocken, innerhalb eines Bereichs von 0,25:1 bis 2,5:1 liegt.

## Revendications

1. Film polymère revêtu comprenant :
a) un substrat polymère comprenant un premier côté et un second côté ;
b) un revêtement arrière sur le second côté du substrat, le revêtement arrière comprenant :
1) un ionomère comprenant de 50% en poids à 98% en poids d'un ou plusieurs monomères sans carbonyle choisis dans un groupe constitué de styrène ; des isomères du méthylstyrène, des isomères de styrène halogéné, du chlorure de vinyle, du chlorure de vinylidène, du butadiène, de l'acrylonitrile, du méthacrylonitrile, des isomères d'éthylène, de propylène et de butylène ; et de 50% en poids à 2% en poids d'un ou plusieurs choisis dans un groupe constitué de l'acide acrylique, de l'acide méthacrylique, de l'acide crotonique, de l'acide maléique et de l'acide itaconique ; et
2) des particules d'un minéral colloïdal résistant à l'eau, dans lequel un minéral résistant à l'eau est celui qui, après avoir été appliqué comme composant d'une composition de revêtement sur un substrat et séché, ne se réionise pas facilement en présence d'eau, dans lequel une majorité en poids des particules ont un diamètre moyen tridimensionnel non supérieur à 0,1 micromètre (0,1 micron), et dans lequel une majorité en poids des particules n'a pas de diamètre moyen dans aucune dimension d'un système de coordonnées cartésiennes x-y-z de moins de 0,0005 micromètre (0,0005 micron), dans lequel une forme générale de chacune des particules est sphérique ou cubique, et dans lequel les particules comprennent de 25% en poids à 55% en poids du revêtement de côté arrière lorsqu'il est séché ; et
c) un revêtement de côté avant sur le premier côté du substrat, dans lequel le revêtement de côté avant peut être imprimé.

2. Film polymère revêtu selon la revendication 1, dans lequel le revêtement de côté arrière comprend en outre :
3) un agent de réticulation.

3. Film polymère revêtu selon la revendication 1, dans lequel l'ionomère est un ionomère auto-réticulant.

4. Film polymère revêtu selon la revendication 1, dans lequel l'ionomère comprend de 30% en poids à 80% en poids du poids du revêtement de côté arrière lorsque le revêtement de côté arrière est sec.

5. Film de polymère revêtu selon la revendication 1, dans lequel le minéral colloïdal résistant à l'eau comprend un composant minéral qui est résistant à l'eau lorsqu'il est sec.

6. Film polymère revêtu selon la revendication 5, dans lequel au moins une majorité en poids du composant minéral comprend du silicone et de l'oxygène.

7. Film polymère revêtu selon la revendication 2, dans lequel l'agent de réticulation comprend un agent de réticulation réactif avec un carboxyle, dans lequel l'agent de réticulation réactif avec un groupe carboxyle comprend au moins l'un parmi des composés métalliques coordinants, des dérivés de silane, aziridine, isocyanate, époxy et dans lequel l'agent de réticulation réticule de 5% en poids à 35% en poids des groupes acides présents dans l'ionomère.

8. Film de polymère revêtu selon la revendication 1, dans lequel le revêtement de côté arrière comprend en outre un agent d'insolubilisation, dans lequel l'agent d'insolubilisation comprend une dispersion de polymère anionique aqueuse incluant au moins une parmi une amine réactive avec un carbonyle et une fonction hydrazine.

9. Film polymère revêtu selon la revendication 1, dans lequel le minéral colloïdal résistant à l'eau comprend au moins l'un parmi la silice, l'alumine, le dioxyde de titane, le carbonate de calcium, le fluorosilicate de magnésium sodique, l'hectorite de sodium synthétique, la bentonite blanche, la montmorillonite, les polyphosphates alcalins, le talc, les sels de silicate alcalin, le verre soluble, la silice traitée en surface, l'alumine traitée en surface, le dioxyde de titane traité en surface, le carbonate de calcium traité en surface et le talc traité en surface.

10. Film polymère revêtu selon la revendication 1, dans lequel au moins l'un des premier et second côtés du substrat polymère est traité avec un traitement de surface choisi dans un groupe comprenant un traitement à la flamme, un traitement au plasma et un traitement corona, dans lequel au moins l'un du premier côté et du second côté du substrat polymère est traité avant l'impression ou avant l'application d'un revêtement sur le premier côté ou le second côté du substrat polymère.

11. Film de polymère revêtu selon la revendication 1, comprenant en outre une amorce positionnée entre le substrat de polymère et le revêtement de côté arrière.

12. Film de polymère revêtu selon la revendication 1, dans lequel un rapport de % en poids d'ionomère au % en poids des particules du minéral colloïdal résistant à l'eau dans le revêtement de côté arrière lorsqu'il est sec est d'au moins 1:1.

13. Film de polymère revêtu selon la revendication 7, dans lequel un rapport de % en poids d'agent d'insolubilisation au % en poids des particules du minéral colloïdal résistant à l'eau dans le revêtement de côté arrière lorsqu'il est sec est compris dans l'intervalle de 0,25:1 à 2,5:1.
